# EUROPÄISCHE PATENTANMELDUNG

(11) **EP 4 184 692 A2**
(43) Veröffentlichungstag der Anmeldung: **24.05.2023**
(21) Anmeldenummer: 22020569.4
(22) Anmeldetag: 21.11.2022
(51) Int. Cl.: H01M 50/317, H01M 50/358, H01M 50/30

(54) **BATTERIESYSTEM**

(30) Priorität: 19.11.2021 DE 102021005751
(71) Anmelder: Wenzl, Heinz, 37520 Osterode (DE)
(72) Erfinder: Wenzl, Heinz, 37520 Osterode (DE); Börger, Alexander, 38165 Flechtorf (DE)
(74) Vertreter: Rebbereh, Cornelia

(57) **Zusammenfassung**

Die Erfindung betrifft eine ein Batteriesystem (1) mit zumindest einer Lithium-Ionen-Zelle (10), wobei die zumindest eine Lithium-lonen-Zelle (10) zumindest ein Zellgehäuse (15) aufweist, das das Zellinnere (18) der Lithium-lonen-Zelle (10) ummantelt, wobei das zumindest eine Zellgehäuse (15) der zumindest einen Lithium-lonen-Zelle (10) zumindest eine formstabile Öffnung (14) aufweist und das Batteriesystem (1) zumindest einen , durch einen Behälter oder ein Gasführungssystem gebildeten äußeren geschlossenen Gasraum (2) umfasst, wobei der Behälter gasdicht mit dem Zellinneren (18) der zumindest einen Lithium-lonen-Zelle (10) verbunden ist, wobei a) im Normalbetrieb ein Gas- und/oder Stofftransport durch die zumindest eine formstabile Öffnung (14) zwischen dem Zellinneren (18) als innerem Gasraum und dem zumindest einen äußeren Gasraum (2) vorgesehen ist und b) bei Druckanstieg im Zellinneren (18) durch Nutzung des Joule-Thomson-Effekts an der zumindest einen formstabilen Öffnung (14) das ausströmende Gas sowie das Zellgehäuse (15) abkühlbar ist oder gekühlt wird, und c) ein Zentralventil (31) im Behälter vorgesehen ist, das einen durch das Zellinnere (18) als innerem Gasraum und den äußeren Gasraum (2) gebildeten Raum im Normalbetrieb von der Umgebung (4) des Batteriesystems (1) abtrennt und bei Druckanstieg in dem Zellinneren (18) der Lithium-lonen-Zelle (10) öffnet.

## Beschreibung

Die Erfindung betrifft ein Batteriesystem mit zumindest einer Lithium-Ionen-Zelle, wobei die zumindest eine Lithium-Ionen-Zelle zumindest ein Zellgehäuse aufweist, das das Zellinnere der Lithium-Ionen-Zelle ummantelt, sowie ein Fahrzeug für den Straßenverkehr, ein Transportmittel, das nicht für den Straßenverkehr vorgesehen ist, eine stationäre Energieversorgungsanlage sowie ein portables Gerät mit zumindest einem solchen Batteriesystem.

Derartige Batteriesysteme sind im Stand der Technik bekannt. Unter einem Batteriesystem wird hier ein aus einer oder mehreren Zellen bestehender Energiespeicher mit allen für den Betrieb und die Integration in eine Einheit, wie ein Gerät, eine Anlage, etc. erforderlichen Komponenten verstanden, wobei mehrere Zellen als Subsystem, hier Modul genannt, zusammengefasst sein können, und die einzelnen Zellen sowie die Module sowohl in Reihe als auch parallel geschaltet werden können, um ein Batteriesystem zu bilden.

Die in Batteriesystemen gespeicherte elektrische Energie wird im Normalbetrieb über die Pole an elektrische Verbraucher abgegeben und kann mittels Ladegeräten wieder zurückgeführt werden. Durch diesen Prozess erfolgt eine Erwärmung des Batteriesystems. Wird das Batteriesystem durch zu hohe Stromamplituden und zu hohen Energiedurchsatz, durch zu hohe Entladeströme (z.B. bei einem Kurzschluss außerhalb des Batteriesystems), durch zu hohe Ladeströme und Ladespannungen, durch externe Wärmequellen und durch einen Kurzschluss innerhalb einer Zelle zu stark erwärmt, dann beginnen in der Zelle auch exotherme chemische Reaktionen der chemischen Bestandteile der Zelle. Die Zelle erwärmt sich weiter, selbst wenn externe Ursachen beseitigt werden. Durch die steigende Temperatur beschleunigen sich die exothermen Reaktionen immer weiter, bis es zu einem sog. Thermal Runaway in einer Zelle kommt, der gegebenenfalls auch auf andere Zellen übergreift. Das Übergreifen auf benachbarte bzw. alle Zellen in einem Batteriesystem oder ein oder mehrere Module, bestehend aus mehreren Zellen, wird als Thermal Propagation bezeichnet.

Die Auswirkungen eines Thermal Runaway und Thermal Propagation sind idealerweise weitestgehend zu minimieren. Ein Teil des Batteriesystems oder das ganze Batteriesystem kann zu brennen beginnen und kann andere Gegenstände in der Umgebung entzünden. Die im Brandfall entstehenden Gase können Fluor- und Phosphorverbindungen mit sehr hoher Korrosionswirkung und Toxizität enthalten.

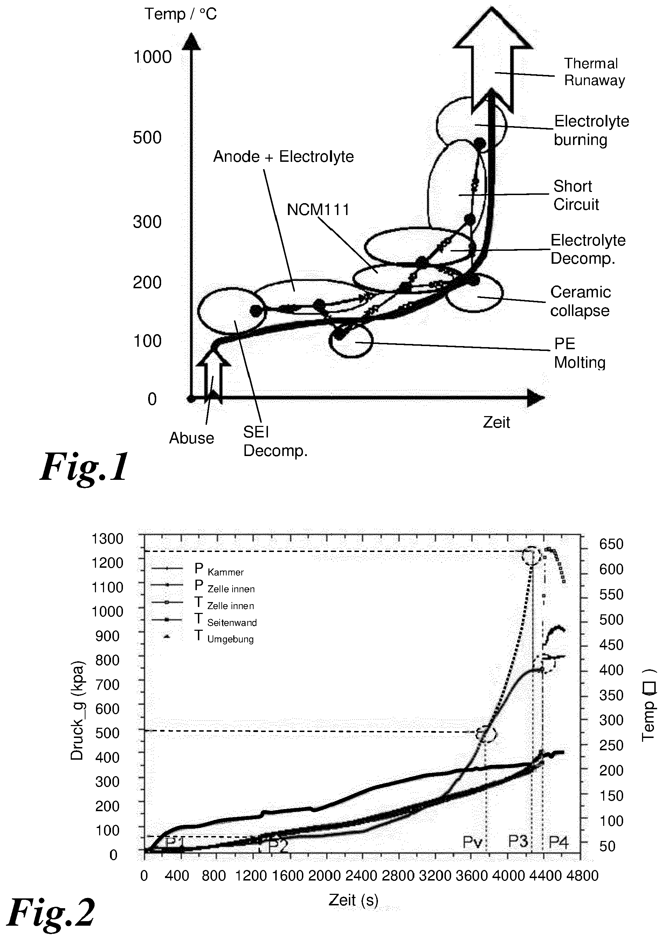

Die in den Figuren 1 und 2 gezeigten Diagramme zeigen schematisch (Figur 1) und als Messung (Figur 2) den in etwa zu erwartenden Druck- und Temperaturanstieg, wobei bei den Druck- und Temperaturangaben zu beachten ist, wo und wie gemessen wird. Auch bei unterschiedlicher Auslösung eines Thermal Runaway und damit erwartetem unterschiedlichen Verlauf des Druck- und Temperaturanstiegs ergeben sich ähnliche Darstellungen wie in den Figuren 1 und 2. Die in Figur 2 gezeigten Druckkurven stammen aus einem Experiment, in dem ein Gegendruck außerhalb der Zelle aufgebaut wurde. Erkennbar ist der etwas langsamere Druckanstieg als Temperaturanstieg.

Der dabei ablaufende Prozess ist in der wissenschaftlichen Literatur sehr gut bekannt. Er wird hier soweit beschrieben, wie er zum Verständnis der Aufgabenstellung und der erfindungsgemäßen Lösung relevant ist. In der Zelle, in der ein Thermal Runaway stattfindet, beginnen sich die organischen Lösungsmittel und, bei Zellen mit Anodenmaterial bestehend aus Kohlenstoff bzw. Graphit, die sogenannte Solid-Electrolyte-Interface-Schicht (SEI) exotherm zu zersetzen. Einige der ersten gasförmigen Zersetzungsprodukte, die gemessen werden können, sind Wasserstoff und Kohlenstoffmonoxid. Der Druck in der Zelle und die Temperatur steigen an. Das Kathodenmaterial, in den meisten Fällen Metalloxide, beginnt sich zu zersetzen, wobei Sauerstoff frei wird.

Je nach Zellmaterialien und Ursache für die Erwärmung ist der Temperatur- und Druckverlauf anders. Üblicherweise wird innerhalb von kurzer Zeit eine lokale Temperatur im Bereich von 100 - 130 °C erreicht bei gleichzeitigem noch geringen Anstieg des Drucks. Danach steigen die Temperatur und der Druck langsam weiter an und es beginnt nach einigen Minuten im Bereich von 150 - 200 °C bzw. ca. 1.000 mbar ein schneller weiterer Druckanstieg und eine stark beschleunigte Erwärmung, u.a. auch weil das Kathodenmaterial beginnt, sich exotherm zu zersetzen. Aus der Analyse der emittierten Gase und anderen Überlegungen heraus wird angenommen, dass die lokale Maximaltemperatur im Inneren einer Zelle im Bereich von 1.000 °C liegen kann. Da Lithium-Ionen-Zellen in der Regel eine Berstöffnung aufweisen, die bei Überschreiten von vorgegebenen Grenzwerten, z.B. einigen tausend mbar, an einer vorbereiteten Materialverdünnung zu einem Bruch oder Riss des Gehäusematerials führt, sind die tatsächlichen Druckverhältnisse noch wenig dokumentiert.. Die Nutzung von wiederverschließbaren Berstöffnungen wäre nicht sinnvoll, weil die Zelle zum Zeitpunkt des Öffnens in der Regel erhebliche Schäden aufweisen wird. Der genaue Verlauf der Druck- und Temperaturerhöhung ist abhängig von den für die Zelle genutzten Materialien und der Ursache für den Beginn eines Thermal Runaways.

Das austretende Gas wird manchmal mit einem Gasstrahl hoher Temperatur verglichen, dessen Strömungsgeschwindigkeit nach wenigen Sekunden stark zurückgeht, weil der in der Zelle aufgebaute Druck sich entspannen kann. Die Brenn- und Entflammeigenschaften der Gase werden oft mit Propan verglichen.

Dieser heiße Gasstrahl kann sich entweder an dem in der Umgebungsluft vorhandenen Sauerstoff selbst entzünden oder entzündet sich an der Umgebungsluft durch mitgerissene heiße Partikel aus der Zelle. Die Zelle brennt einige Minuten weiter, bis das in der Zelle vorhandene brennbare Material verbraucht ist. Der Thermal Runaway benachbarter Zellen kann bereits beginnen, bevor der Thermal Runaway der ersten Zelle detektiert werden kann.

Ein Grund für einen Thermal Runaway von Lithium-Ionen-Zellen ist die Verwendung von organischen Lösungsmitteln als Bestandteil des Elektrolyten. Weniger leicht entflammbare Elektrolyte sind zwar bekannt, haben sich jedoch aufgrund zahlreicher anderer technischer Probleme bisher nicht durchgesetzt. Die Nutzung organischer Lösungsmittel bedingt, dass Zellen von der Umgebung hermetisch abgeschlossen werden müssen, damit durch Abgabe von Lösungsmitteldämpfen an die Umgebung die Zelleigenschaften nicht verschlechtert werden. Die hermetische Trennung des Zellinneren von der Umgebung verhindert auch, dass Zellen durch die Einwirkung der Umgebungsluft geschädigt werden, z.B. durch Luftfeuchtigkeit, da Wasser im Elektrolyten aufgrund der hohen Zellspannungen sofort in Wasserstoff und Sauerstoff zerlegt wird und Bestandteile des Elektrolyten mit Wasser Fluorwasserstoff (HF) bilden können. Im Gegensatz zu sogenannten verschlossenen Bleibatterien mit einem internen Sauerstoffkreislauf in den Zellen ist es dagegen aus elektrochemischen Gründen nicht erforderlich, getrennte Gasräume für jede Zelle zu schaffen. Die jetzige Bauweise von Lithium-Ionen-Zellen als hermetisch abgeschlossene Systeme ist Handhabungs- und Produktionsgründen geschuldet und nicht systembedingt notwendig.

Aufgrund des hermetischen Verschließens jeder Zelle haben diese in der Regel eine Berstöffnung, um bei Überdruck in der Zelle ein Zersplittern des Zellgehäuses zu verhindern.

Mögliche Strategien zum Umgang mit diesem Gefahrenpotential sind Methoden zur Früherkennung, z.B. Spannungs- und Temperaturmessungen, Vergleich von Messdaten mit den aus parallel durchgeführten, modellgestützten Berechnungen der zu erwartenden Werte, oder Messungen des Drucks, z.B. auch über die Messung der Ausdehnung der Zellgehäuse. Leider bringt die Temperaturmessung an der Außenseite des Zellgehäuses technische Probleme mit sich, da jede Zelle an mehreren Stellen gemessen werden müsste, da die Temperaturunterschiede auf dem Zellgehäuse wegen der lokalen Wärmefreisetzung bei internen Kurzschlüssen am Anfang sehr groß sind.

Darüber hinaus gibt es konstruktive Vorschläge, z.B. die Anordnung einer Berstöffnung so vorzusehen, dass der heiße Gasstrahl nicht direkt auf die benachbarte Zelle gerichtet ist, sondern auf Zwischenräume, oder auch das Vorsehen wärmeisolierender oder gut temperaturleitender Zwischenschichten zum Schutz benachbarter Zellen. Darüber hinaus können alle Materialien der Zelle bzw. eines aus vielen Zellen bestehenden Moduls oder des Batteriesystems mit mehreren Modulen aus Materialien bestehen, die eine geringe Brandlast darstellen und schwer zu entflammen sind. Außerdem wird z.B. durch geeignete Anordnung der Berstöffnung der durch das Batteriesystem fließende Strom beim Bersten der Zelle unterbrochen. Ferner wird durch den Einbau von Sensoren in jeder Zelle in der Literatur vorgeschlagen, das in der Zelle vorhandene Gas auf die Vorläufer eines Thermal Runaway (Wasserstoff und Kohlenstoffmonoxid) zu untersuchen.

Es sind im Stand der Technik Lösungen bekannt, die eine Ableitung der entstehenden Gase betreffen. Aus der DE 10 2011 109 310 A1, ist eine Vorrichtung zur Verringerung des Innendrucks in einem Batteriegehäuse mit einem Ventilkörper und einem Federelement bekannt, wobei ein Anstieg des Innendrucks den Ventilkörper gegen die Kraft des Federelements von einer eine Öffnung verschließenden Stellung in eine die Öffnung freigebende Stellung bewegt, und wobei das Federelement bei einem Absinken des Innendrucks den Ventilkörper in die die Öffnung verschließende Stellung bewegt, wobei der Ventilkörper und das Federelement unabhängig voneinander ausgebildet und miteinander verbunden sind. Es ist somit ein verschließbares Ventil bekannt, um Druck aus einer Zelle abzulassen. Aus der DE 10 2008 007 669 A1 ist eine Batterie bekannt, die ein Gehäuse, einen negativen Pol bzw. Minuspol, einen positiven Pol bzw. Pluspol, einen mit dem negativen Pol und/oder positiven Pol verbundenen elektrischen Leiter zum Ableiten eines elektrischen Stromes und eine Entgasungsleitung zum Ableiten von Gas oder Dämpfen aus der Batterie umfasst, wobei der negative Pol und/oder der positive Pol und/oder das Gehäuse mit einer Öffnung versehen ist und die Entgasungsleitung dahingehend mit dem negativen Pol und/oder dem positiven Pol und/oder mit dem Gehäuse verbunden ist, dass das Gas oder die Dämpfe unmittelbar aus der Öffnung in die Entgasungsleitung leitbar sind. Es ist somit ein Ventil vorgesehen, das in eine Entgasungsleitung öffnet.

Die US 9 478 887 B2 offenbart eine Anordnung von Ventilen auf Zellen in einem Zellpack, wodurch ein Bersten des Zellgefäßes (rupture) vermieden werden soll. Das Ventil muss somit bei einem ausreichend niedrigen Druck eingestellt werden.

Aus der US 10,734,623 B2 sind ein Verfahren und eine Anordnung bekannt, wobei zur Bereitstellung einer Warnmeldung ein in den Zellen eines Moduls befindliches Ventil öffnet und der dadurch verursachte Druckanstieg in einem zweiten Gasraum gemessen werden kann, der dann wiederum bei steigendem Druck über ein weiteres Ventil den Druck an die Umgebung ablässt.

Das JP2011175844A offenbart mehrere miteinander verbundene Behälter, die ausströmendes Gas aufnehmen, bevor es endgültig, bereits unter Druck, an die Umgebung abgegeben wird.

Aus der JP2009054303A ist das Vorsehen einer guten Kühlung bekannt.

Die DE 10 2010 039 976 A1 offenbart eine Batterie, die ein Gehäuse umfasst, mit einer Mehrzahl von in dem Gehäuse angeordneten Batteriezellen, wobei jede Batteriezelle zumindest ein Abblasventil aufweist und ein Ableitungsrohrsystem zum Abführen von aus einem, mehreren oder allen Abblasventilen der Batteriezellen freigesetzten Gasen, wobei das Ableitungsrohrsystem eine Mehrzahl von separaten Anschlüssen zur Aufnahme der freigesetzten Gase aufweist sowie eine gemeinsame Ableitungsführung, in die die separaten Anschlüsse münden und über die die freigesetzten Gase aus dem Gehäuse abführbar sind, wobei zwischen den Abblasventilen der Batteriezellen und den separaten Anschlüssen des Ableitungsrohrsystems eine Schutzfolie angeordnet ist, so dass ein unmittelbarer Kontakt der Batteriezellen mit im Ableitungsrohrsystem befindlichen Gasen unterbunden ist. Es wird somit ein Systemoffenbart, bei dem das aus einer Zelle austretende Gas in einen weiteren Behälter geführt wird, der durch einen Folienverschluss verhindert, dass das austretende Gas von einem gemeinsamen Abluftrohr zu anderen Zellen strömen kann. Das Abblasventil ist vergleichbar zu einer Berstöffnung.

Aus der DE 10 2013 221 760 A1 ist eine Batteriezelle, umfassend ein die Batteriezelle umgebendes Zellgehäuse und ein in das Zellgehäuse eingesetztes Sicherheitsventil, bekannt, welches ausgebildet ist, bei einem Anstieg eines innerhalb des Zellgehäuses herrschenden Zellinnendrucks über einen ersten Schwellwert hinaus zu öffnen und somit ein Ausströmen eines Mediums aus dem Zellgehäuse zu ermöglichen. Ferner weist die Batteriezelle ein in das Zellgehäuse eingesetztes Druckausgleichsventil auf, welches ausgebildet ist, bei einem Anstieg eines innerhalb des Zellgehäuses herrschenden Zellinnendrucks über einen zweiten Schwellwert hinaus zu öffnen und bei einem Absinken eines innerhalb des Zellgehäuses herrschenden Zellinnendrucks unter den zweiten Schwellwert zu schließen, wobei der zweite Schwellwert kleiner als der erste Schwellwert ist. Ferner wird ein Verfahren zum Herstellen einer solchen Batteriezelle offenbart, wobei das Druckausgleichsventil in eine Einfüllöffnung des Zellgehäuses zum Befüllen des Zellgehäuses mit einem flüssigen Elektrolyten eingesetzt wird.

Die DE 10 2017 221 622 A1 offenbart ein Speichergehäuse für einen Hochvoltspeicher eines Kraftfahrzeugs mit einem Gehäuseinnenraum zum Aufnehmen von Speicherzellen des Hochvoltspeichers, einem Druckausgleichselement zum Druckausgleich zwischen dem Gehäuseinnenraum und einer Umgebung, und einem Sicherheitsventil, welches dazu ausgelegt ist, einen durch eine Notentgasung zumindest einer der Speicherzellen in dem Gehäuseinnenraum entstehenden Überdruck abzulassen. Das Druckausgleichselement ist als ein Belüftungselement zum permanenten und bidirektionalen Druckausgleich durch Stoffaustausch zwischen dem Gehäuseinnenraum und der Umgebung ausgebildet. Das Sicherheitsventil ist dazu ausgebildet, das Belüftungselement vor dem für das Belüftungselement schädlichen Überdruck zu schützen und ein bei der Notentgasung aus den Speicherzellen austretendes Heißgas an dem Belüftungselement vorbei in die Umgebung zu leiten.

Keine dieser Lösungen des Standes der Technik verhindert jedoch, dass ein sehr heißer Gasstrahl aus einem Gemisch leicht entflammbarer Gase mit hohem Druck aus einer Zelle austritt.

Ein, im Rahmen der vorliegenden Erfindung wichtiger Aspekt zur Reduzierung der Brandrisiken ist die Verminderung des Sauerstoffgehalts außerhalb der Zelle. In Bibliotheken und Archiven für Dokumente und in Lagern zur Aufbewahrung von Lithium-Ionen-Zellen wird eine sauerstoffreduzierte Atmosphäre vorgesehen. Versuche haben gezeigt, dass bei Initiierung eines Thermal Runaway, z.B. durch massives Überladen, die entstehende Flamme nicht mehr genügend Energie bereitstellt und benachbarte Zellen nicht ebenfalls einen Thermal Runaway erleiden. Es reicht dabei, den Sauerstoffgehalt der Luft auf ca. 15 % zu reduzieren.

In der wissenschaftlichen Literatur gibt es einen Konsens darüber, dass zwar einige der Ursachen für die Initiierung eines Thermal Runaways weitgehend vermieden werden können, nicht aber ein interner Kurzschluss in einer Zelle, so dass die latente Gefahr des Auftretens eines Thermal Runaways besteht.

Ein Thermal Runaway, also das exotherme thermische Durchgehen von Reaktionen, ist in der chemischen Industrie sehr bekannt und es gibt Kriterien, mit denen seine Vermeidung sicher gewährleistet werden kann (Semenov-Theorie). Die Theorie fordert, dass bei jeder Temperatur unterhalb einer kritischen nicht mehr beherrschbaren Temperatur die Wärmeabfuhr größer sein muss als die Wärmeerzeugungsleistung. Eine Übertragung auf Lithium-Ionen-Zellen könnte z.B. dadurch erfolgen, dass Stromkollektoren mit sehr guter Wärmeleitfähigkeit verwendet werden, die Menge an elektrochemisch aktivem Material, d.h. die auf Stromkollektoren aufgetragene Materialdicke, reduziert wird, und statt Zellen mit mehrlagigen Elektrodenstapeln oder Elektrodenwickeln nur eine, dafür aber makroskopisch sehr große Elektrode mit somit sehr großer Oberfläche der Zelle verwendet wird. Es ist offensichtlich, dass derartige Lösungsansätze die spezifische Energie und Leistung deutlich verschlechtern und die Handhabung unpraktikabel machen würden. Typische flächenbezogene Kapazitäten von Lithium-Ionen-Zellen liegen im Bereich von 2 mAh/cm². Eine einlagige Zelle hätte somit bei einer Kapazität von 10 Ah zur Maximierung der Wärmeabfuhr eine Fläche von ca. 0,5 m², bei Reduzierung der flächenbezogenen Kapazität noch mehr.

Dennoch stellt sich die Frage, ob das Grundprinzip der Semenov-Theorie, die Schaffung einer sicheren Zone, also Zustandsbereiche einer Zelle und/oder Moduls bzw. eines Batteriesystems, innerhalb derer das Auftreten eines Thermal Runaways grundsätzlich nicht möglich ist, auf Lithium-Ionen-Zellen übertragen werden kann.

Der Erfindung liegt daher die Aufgabe zugrunde, ein Batteriesystem mit zumindest einer Lithium-Ionen-Zelle, wobei die zumindest eine Lithium-Ionen-Zelle zumindest ein Zellgehäuse aufweist, das das Zellinnere der Lithium-Ionen-Zelle ummantelt, zu schaffen, bei dem die beschriebenen Nachteile vermieden werden und insbesondere die sich zu Beginn eines thermischen Ereignisses entwickelnde Energie verringert oder dissipiert werden kann, sichere Zonen für den Betrieb von Lithium-Ionen-Zellen geschaffen oder der Parameterbereich für die Existenz einer sicheren Zone maximiert werden kann, eine möglichst frühe Detektierung kritischer Zustände zur Einleitung von Gegenmaßnahmen geschaffen und dabei zugleich Änderungen des jetzigen Designs von Lithium-Ionen-Zellen minimiert werden können.

Die Aufgabe wird für ein Batteriesystem nach dem Oberbegriff des Anspruchs 1 dadurch gelöst, dass das zumindest eine Zellgehäuse der zumindest einen Lithium-Ionen-Zelle zumindest eine formstabile Öffnung aufweist und das Batteriesystem zumindest einen, durch einen Behälter oder ein Gasführungssystem gebildeten äußeren geschlossenen Gasraum umfasst, wobei der Behälter gasdicht mit dem Zellinneren der zumindest einen Lithium-Ionen-Zelle verbunden ist, wobei a) im Normalbetrieb ein Gas- und/oder Stofftransport durch die zumindest eine formstabile Öffnung zwischen dem Zellinneren als innerem Gasraum und dem zumindest einen äußeren Gasraum vorgesehen ist und b) bei Druckanstieg im Zellinneren durch Nutzung des Joule-Thomson-Effekts an der zumindest einen formstabilen Öffnung das ausströmende Gas sowie das Zellgehäuse abkühlbar ist oder gekühlt wird, und c) ein Zentralventil im Behälter vorgesehen ist, das einen durch das Zellinnere als innerem Gasraum und den äußeren Gasraum gebildeten Raum im Normalbetrieb von der Umgebung des Batteriesystems abtrennt und bei Druckanstieg in dem Zellinneren der Lithium-Ionen-Zelle öffnet. Weiterbildungen der Erfindung sind in den abhängigen Ansprüchen definiert.

Dadurch wird ein Batteriesystem mit zumindest einer Lithium-Ionen-Zelle geschaffen, bei dem die bei einem Thermal Runaway insgesamt freigesetzte Wärmemenge über einen längeren Zeitraum und bei niedrigeren Temperaturen als im Stand der Technik an die Umgebung abgeführt wird, so dass die Gefahr von exothermen Reaktionen der ausströmenden Gase mit Stoffen der Umgebung vermieden und die Bildung toxischer und aggressiver Stoffe minimiert wird. Durch Vorsehen der formstabilen Öffnung in der zumindest einen Lithium-Ionen-Zelle kann das bei Abusebedingungen entstehende Gas bzw. Stoffgemisch bei einer vorgebbaren Temperatur und einem vorgebbaren Druck aus dem Zellinneren und dem durch den Behälter gebildeten äußeren Gasraum ausströmen, bevor Druck und Temperatur sich so weit erhöhen, dass sie auf das Zellgehäuse und/oder die Umgebung des Batteriesystems eine zerstörerische Wirkung ausüben können. Die formstabile Öffnung dient unter Nutzung des Joule-Thomson-Effekts zur Temperaturabsenkung bzw. zum Kühlen des oder der ausströmenden Gase und des Zellgehäuses, wobei durch die formstabile Öffnung ein ständiger Gas- und/oder Stofftransport zwischen dem Zellinneren und dem zumindest einen äußeren Gasraum ermöglicht ist. Beispielsweise kann das entstehende Gas oder Stoffgemisch durch Öffnen des Zentralventils spätestens bei einer Temperatur von ca. 130 - 180 °C und/oder einem Druck von ca. 500 - 2.000 mbar, insbesondere ca. 1.000 mbar, an die Umgebung ausströmen, wobei diese Angaben auf eine Zelle und einen Druck über dem Umgebungsdruck bezogen sind. Die formstabile Öffnung kann somit die bei fast allen Lithium-Ionen-Zellen des Standes der Technik vorhandene Berstöffnung ersetzen.

Das Batteriesystem umfasst somit zumindest einen Behälter, der mit nur einer Lithium-Ionen-Zelle oder mit mehreren versehen sein kann. Der Gasraum außerhalb der jeweiligen Lithium-Ionen-Zelle wird hier als äußerer Gasraum bezeichnet, Das Zentralventil kann an einer beliebigen Stelle zwischen den Zellinneren der Lithium-Ionen-Zelle und einer Austrittsöffnung des Behälters angeordnet sein. Der Behälter ist mit allen Lithium-Ionen-Zellen gasdicht verbunden und stellt somit einen Gasraum außerhalb des Zellgehäuses einer jeweiligen Lithium-Ionen-Zelle bereit, somit den äußeren Gasraum. Unter gasdicht wird hier verstanden, dass Umgebungsluft aus der Umgebung der Lithium-Ionen-Zelle bzw. des Batteriesystems nicht einströmen kann, das Gas aus dem Zellinneren der Lithium-Ionen-Zelle und nur dieses Gas in den äußeren Gasraum strömt. Es ist somit eine Gasdichtigkeit gegenüber der Umgebungsluft vorgesehen. Jede Lithium-Ionen-Zelle weist zumindest eine formstabile Öffnung in ihrem zumindest einen Zellgehäuse auf, durch die ein Gas- und/oder Stofftransport zwischen dem Zellinneren und dem zumindest einen äußeren Gasraum vorgesehen ist und die durch Nutzung des Joule-Thomson-Effekts das ausströmende Gas sowie das Zellgehäuse kühlt. Das Zentralventil im Behälter trennt das Zellinnere und den äußeren Gasraum von der Umgebung des Batteriesystems ab, damit im Normalbetrieb keine Luftfeuchtigkeit und kein Wasserdampf in das Zellinnere gelangen können, unter Abusebedingungen aber eine Druckentlastung möglich ist. Das Zentralventil öffnet bei einem deutlich niedrigeren Druck und geringerer Temperatur als bei den bekannten Lithium-Ionen-Zellen verwendete Berstöffnungen. Damit wird eine frühzeitige Abfuhr von Energie aus exothermen Prozessen im Zellinneren an die Umgebung erzielt und somit die in einer Zelle sich kumulierende Wärmemenge reduziert. Der Behälter des Batteriesystems ist gasdicht mit der zumindest einen Lithium-Ionen-Zelle verbunden. Gas aus dem Zellinneren der zumindest einen Lithium-Ionen-Zelle kann ständig in den durch den Behälter gebildeten Gasraum strömen, und ein Zentralventil im Behälter stellt eine hermetische Trennung von Umgebungsluft und Zellinnerem und Behältervolumen, also dem inneren Volumen des Behälters des Batteriesystems, sicher. Das Zentralventil öffnet bei niedrigem Druck.

Vorteilhaft kann die formstabile Öffnung zur Kühlung eines ausströmenden Gases und zur Optimierung des Joule-Thompson-Effekts als Düse ausgebildet sein, wobei eine maximale Kühlwirkung der ausströmenden Gase auf die Düse vorteilhaft ist, um dem ausströmenden Gas so viel Wärme wie möglich zu entziehen. Dies kann durch eine Gestaltung der Düse erfolgen, die einen maximalen Kontakt der ausströmenden Gase mit dem Material der Düse erzwingt. Die Düse kann dabei auf einen Druckbereich von ca. 7 - 10 bar ausgelegt werden, da dies der während eines Thermal Runaways zu erwartende Druck im Zellinneren ist. Das Gasführungssystem oder der Behälter des Batteriesystems sind ein Gasführungssystem, das an einer beliebigen Stelle ein Ventil enthält und gasdicht mit der Düse der jeweiligen Lithium-Ionen-Zelle verbunden ist. Der vom Zellgehäuse der zumindest einen Lithium-Ionen-Zelle gebildete innere Gasraum ist über die Düse ständig mit dem äußeren Gasraum verbunden und diese beiden Gasräume sind von der Umgebung des Batteriesystems getrennt.

Weiter vorteilhaft kann die zumindest eine Düse aus zumindest einem Material mit einer hohen Wärmeleitfähigkeit von zumindest etwa 15 W/(m²K), hoher Temperaturleitfähigkeit oder hoher Wärmekapazität bestehen, z.B. aus Aluminiumoxid, Aluminium, Kupfer oder Edelstahl, oder dieses umfassen. Gerade Edelstahl ist aufgrund seiner hohen Wärmekapazität ein sehr geeignetes Material. Ferner kann die zumindest eine Düse mit dem umgebenden Material des zumindest einen Zellgehäuses der Lithium-Ionen-Zelle verbunden sein oder werden oder die zumindest eine Düse kann integraler Bestandteil des Zellgehäuses der Lithium-Ionen-Zelle sein und insbesondere aus dem gleichen Material wie dieses bestehen. Der Joule-Thompson-Effekt wird somit zur Absenkung der Temperatur des mit erhöhtem Druck ausströmenden Gases genutzt und damit zur Kühlung des Gases, der Düse und damit auch des Zellgehäuses. Bei Zellen mit Wickelkern kann es vorteilhaft sein, die Düse innerhalb des Wickelkerns zu positionieren. Bei einer Düse, die nicht integraler Bestandteil des Zellgehäuses ist, kann eine thermische Isolierung zwischen Zellgehäuse und Düse, die die Wärmeabgabe des Gases an die Düse und damit eine Temperaturminderung bewirkt, vorteilhaft sein.

Der Joule-Thomson-Effekt bezeichnet die Temperaturänderung eines Gases bei einer isenthalpen Druckminderung. Er tritt auf, wenn ein Gas oder Gasgemisch durch Drosselung (= Druckänderung) eine Temperaturänderung erfährt. Drosselt man ein Gas z.B. durch Einbau einer Blende oder eines anderen Hindernisses in einer Rohrleitung, expandiert das Gas. Dies bedeutet, dass das vom Gas eingenommene Volumen hinter dem Hindernis zunimmt, ebenso wie der mittlere Teilchenabstand. Ferner verändert sich die Temperatur bei einem realen Gas. Wenn der mittlere Teilchenabstand zunimmt, wird Arbeit gegen die Anziehungskräfte, die zwischen den Teilchen wirken, verrichtet, die Energie hierzu kommt aus der kinetischen Energie des Gases, die dadurch verringert wird. Die Teilchen werden im Mittel langsamer und das Gas kühlt in der Folge ab. Lediglich bei Wasserstoff mit seiner geringen Wärmekapazität und einigen Edelgasen gibt es diesen Effekt im Bereich der hier herrschenden Temperaturen nicht. Der Joule-Thomson-Effekt tritt somit auch bei bekannten Berstöffnungen auf, die nach Reißen der Folie jedoch einen undefinierten Querschnitt und unbestimmte Kontur aufweisen, und somit keine zur Optimierung der Kühlwirkung erforderliche Strömungsbeeinflussung der ausströmenden Gase ermöglichen. Wenn die Öffnung der erfindungsgemäßen Joule-Thomson-Düse eine ähnliche Größe wie die jetzigen Berstöffnungen aufwiese, z.B. ca, 75%, dann wäre es nicht mehr erforderlich, eine weitere Berstöffnung zur Vermeidung eines Zersplitterns des Zellgehäuses vorzusehen.

Es wird somit ein Batteriesystem geschaffen, das zur Verringerung des Brandrisikos von Lithium-Ionen-Zellen durch Ableiten der entstehenden heißen Gase aus einer Lithium-Ionen-Zelle bei geringerer Temperatur als nach dem Stand der Technik und Nutzung der Kühlwirkung des Joule-Thompson-Effekts führt.

Weiter vorteilhaft können Temperatur- und/oder Gas- und/oder Drucksensoren in dem zumindest einen äußeren Gasraum mehrerer Lithium-Ionen-Zellen außerhalb des Zellinneren der Lithium-Ionen-Zellen zur frühzeitigen Detektion von Gasen genutzt werden, die den Beginn eines Thermal Runaway anzeigen, insbesondere Wasserstoff und Kohlenstoffmonoxid. Die Sensoren können vor Austrittsöffnungen, durch die das entstehende Gas bzw. Stoffgemisch an die Umgebung außerhalb des Batteriesystems abgegeben oder abgeleitet wird, in zumindest einer Außenwandung des äußeren Gasraums bzw. des Behälters angeordnet sein.

Der zumindest eine äußere Gasraum ist als geschlossener, das Zellinnere zumindest einer Lithium-Ionen-Zelle einschließender Gasraum ausgebildet. Das aus der formstabilen Öffnung einer jeweiligen Lithium-Ionen-Zelle durch diese formstabile Öffnung ausströmende Gas strömt vollständig in den äußeren Gasraum ein. Der äußere Gasraum und/oder das Gasführungssystem können von einem Batteriegehäuse umgeben oder von einem Batteriegehäuse gebildet sein. Vorteilhaft kann der Behälter ein Batteriegehäuse sein, das als äußerer Gasraum ausgestaltet ist bzw. der äußere Gasraum von einem Batteriegehäuse umgeben sein. In dem äußeren Gasraum bzw. dem Batteriegehäuse ist zumindest eine Verschlusseinrichtung angeordnet, so dass der zumindest eine äußere Gasraum durch die zumindest eine Verschlusseinrichtung, insbesondere das zumindest eine Zentralventil, von einer das Batteriesystem umgebenden Umgebung getrennt ist. Zumindest ein Zentralventil als Verschlusseinrichtung oder zumindest eine andere Art einer Verschlusseinrichtung kann zwischen dem Volumen, das durch den vom Behälter gebildeten Gasraum und dem Zellinneren zumindest einer Lithium-Ionen-Zelle gebildet wird, und zumindest einer Austrittsöffnung zur Umgebung des Batteriesystems verwendet werden, um das Zellinnere von der Umgebungsluft im ungestörten Betrieb hermetisch zu trennen. Die Ausgestaltung des gemeinsamen Gasraums und der Umgebung des Batteriesystems so, dass eine weitere Wärmefreisetzung durch exotherme Reaktionen der Umgebungsluft mit dem ausströmenden Gas bzw. Stoffgemisch verhindert wird, erweist sich als sehr vorteilhaft.

Weiter vorteilhaft ist in dem Zellgehäuse der Lithium-Ionen-Zelle zumindest eine Verschlusseinrichtung, insbesondere ein Ventil, angeordnet, so dass das Zellinnere der Lithium-Ionen-Zelle des Batteriesystems von der die Lithium-Ionen-Zelle umgebenden Umgebung getrennt oder trennbar ist. Eine einzelne Lithium-Ionen-Zelle ist somit mit einem Ventil gasdicht gegen die Umgebungsatmosphäre verschlossen und der äußere Gasraum kann im ständigen Austausch von Gasen mit der Umgebungsluft stehen. Mehrere Lithium-Ionen-Zellen des Batteriesystems können zumindest einen gemeinsamen äußeren Gasraum aufweisen, der mit dem Zentralventil als Verschlusseinrichtung versehen ist. In beiden Fällen erweist es sich als vorteilhaft, den äußeren Gasraum so zu gestalten, dass er als Gasführungssystem dient, das eine maximale Wärmeabfuhr der Gase an die Umgebung des Batteriesystems erreicht, bis das Gas durch eine Austrittsöffnung an die Umgebungsluft gelangt.

Sowohl die Schaffung eines gemeinsamen Gasraums mehrerer Lithium-Ionen-Zellen mit dem Zentralventil zur hermetischen Abdichtung des Zellinneren der jeweiligen Lithium-Ionen-Zelle von der Umgebungsluft als auch das Versehen jeder Lithium-Ionen-Zelle mit einem Ventil und das Vorsehen des äußeren Gasraums, der mit der Umgebung in ständigem Gasaustausch stehen kann sind sehr vorteilhafte Ausgestaltungen des Batteriesystems gegenüber den Lösungen des Standes der Technik.

Wird zur hermetischen Abdichtung des Zellinneren einer Lithium-Ionen-Zelle von der Umgebung zumindest eine solche Verschlusseinrichtung bzw. zumindest ein Ventil verwendet, beziehen sich die vorstehend genannten Druck- und Temperaturangaben von ca. 130 - 180 °C und von ca. 500 - 2.000 mbar auf die Öffnungsparameter der zumindest einen Verschlusseinrichtung bzw. des zumindest einen Ventils. Ist an dem Zellgehäuse der Lithium-Ionen-Zelle keine Verschlusseinrichtung bzw. kein Ventil vorgesehen, strömt das Gas bei jeder beliebigen Temperatur oder Druck ungehindert durch die zumindest eine Düse in den äußeren Gasraum.

Die zumindest eine Verschlusseinrichtung, insbesondere das zumindest eine Zentralventil oder das zumindest eine Ventil einer Lithium-Ionen-Zelle, ist so ausgebildet oder in dem zumindest einen äußeren Gasraum bzw. Gasführungssystem oder dem Batteriegehäuse angeordnet, dass es bei niedriger Druckerhöhung und/oder Temperaturerhöhung oder bei Detektion zumindest eines vorgebbaren, aus der zumindest einen Lithium-Ionen-Zelle ausströmenden Gases, insbesondere Wasserstoff und Kohlenstoffmonoxid, öffnet. Das im zumindest einen äußeren Gasraum oder Batteriegehäuse vorgesehene Zentralventil kann bei einem unkritischen Druck, insbesondere im Bereich von 500 - 2.000 mbar, insbesondere ca. 1.000 mbar, multipliziert mit einem Volumenfaktor, der sich aus dem Verhältnis von Gasvolumen im Inneren der Lithium-Ionen-Zelle und dem Volumen des äußeren Gasraums bzw. Gasführungssystems oder des Batteriegehäuses ergibt, und/oder einer unkritischen Temperatur, insbesondere im Bereich von 130 - 180 °C, oder bei Detektion von speziellen Gasen, die aus dem Zellinneren der Lithium-Ionen-Zelle ausströmen, insbesondere Wasserstoff und Kohlenstoffmonoxid, öffnen. Wenn der Druck im äußeren Gasraum bei einer großen Anzahl von Lithium-Ionen-Zellen die vorstehend genannte Druckgrenze erreicht, ist der Innendruck in der jeweiligen Lithium-Ionen-Zelle höher als bei einer Zelle mit sehr kleinem äußeren Gasraum, weil der Prozess schon sehr viel länger andauert. Man muss also früher öffnen und das irgendwie berücksichtigen

Die zumindest eine Verschlusseinrichtung, insbesondere das zumindest eine Zentralventil, und der Gasraum zwischen der formstabilen Öffnung der zumindest einen Lithium-Ionen-Zelle und der Austrittsöffnung im Batteriegehäuse bieten nur einen minimalen Strömungswiderstand für den Stofftransport von der formstabilen Öffnung bis zur Austrittsöffnung im Batteriegehäuse.

Die im vorstehend genannten Stand der Technik beschriebenen Sicherheitsvorrichtungen zur Druckentlastung bei Abusebedingungen sind Berstöffnungen, die durch eine Folie, üblicherweise aus Metall, verschlossen sind. Die Berstöffnungen haben üblicherweise, sofern Daten dafür genannt werden, einen Öffnungsdruck im Bereich von 6 - 7 bar, wobei es im Stand der Technik keine Angaben und Überlegungen gibt, bei welchem Druck die größte Sicherheit bei Auftreten eines Thermal Runaways zu erwarten ist. Die Bedeutung der Freisetzung des internen Drucks der jeweiligen Zelle zur Abfuhr von Energie und dadurch den Einfluss auf den Temperaturverlauf, die Sicherheit und die konstruktiv erreichbare Rückwirkung der Kühlwirkung durch die Druckentspannung der Gase auf das Zellinnere und die Temperatur der ausströmenden Gase werden im Stand der Technik nicht diskutiert.

Die einzelnen Lithium-Ionen-Zellen eines Batteriesystems enthalten somit zumindest eine formstabile Öffnung, die das Zellinnere mit dem zumindest einen äußeren Gasraum außerhalb der Lithium-Ionen-Zelle verbindet oder verbinden und von dem aus das ausströmende Gas an die Umgebung abgeleitet werden kann. Die Öffnung ist dabei formstabil im erwarteten Druck- und Temperaturbereich, zumindest bei einer Temperatur von bis zu 700 °C, und einem Druck von ca. 7 bar, also in einem Bereich, bevor oder bei dem eine katastrophale Druck- und Temperaturentwicklung beginnt.

Es ist dabei sinnvoll, dass die formstabile Öffnung für Produktions- und Transportzwecke gas- und elektrolytdicht verschlossen ist. Die Öffnung in der Zellwand wird erst entweder ab Beginn der Nutzung bzw. Inbetriebnahme mit dem äußeren Gasraum oder ab Erreichen eines erhöhten Drucks bzw. einer erhöhten Temperatur verbunden, so dass zwischen dem Zellinneren und dem äußeren Gasraum ein leichter und hoher Materialfluss erfolgen kann. Als vorteilhaft erweist es sich, die für Produktions- und Transportzwecke genutzte Abdichtung der Öffnung so zu gestalten, dass sie bei erhöhtem Druck oder erhöhter Temperatur undicht wird, z.B. durch Verwendung einer dünnen Kunststofffolie oder Mischmetallfolie, die bei einem vorgebbaren Druck und/oder einer vorgebbaren Temperatur reißt und damit undicht wird.

Besonders vorteilhaft ist die formstabile Öffnung im Zellgehäuse so ausgebildet, dass die an der formstabilen Öffnung stattfindende Druckentspannung die Temperatur des ausströmenden Gases maximal vermindert und der Wärmebedarf für die Druckentspannung weitgehend aus der Wärmekapazität der Lithium-Ionen-Zelle entnommen wird. Die formstabile Öffnung kann dabei eine bekannte Düsenform aufweisen und gut wärmeleitend mit dem Zellgehäuse verbunden sein. Vorteilhaft kann die Düse aus zumindest einem metallischen Material bestehen, das gut wärmeleitend mit dem Zellgehäuse verbunden werden kann. Sobald das austretende Gas die Öffnung passiert hat und abgekühlt ist, wird das Gas bzw. Stoffgemisch mit minimalem Strömungswiderstand an die Umgebung des Batteriesystems abgeleitet. Besonders vorteilhaft ist bei Zellen mit einem Wickelkern (Rundzellen und prismatische Zellen) die Anordnung der Düse im Wickelkern, so dass die durch die Expansion der ausströmenden Gase erreichte Kühlwirkung besonders leicht auf das Zellinnere übertragen werden kann, wobei das Zellgehäuse dafür entsprechend modifiziert ist. Vorteilhaft können die als Düse bzw. Joule-Thomson-Düse ausgebildete formstabile Öffnung und das Ventil eine integrale Einheit bilden.

Da im Normalbetrieb das Zellinnere gasdicht von der Umgebung getrennt sein sollte, ist vorteilhaft zwischen dem Zellinneren und dem gemeinsamen Gasraum oder dem Zellinneren und der Umgebung des Batteriesystems die zumindest eine Verschlusseinrichtung, insbesondere das zumindest eine Zentralventil, vorgesehen. Die zumindest eine Verschlusseinrichtung kann weiter vorteilhaft ab einer Gastemperatur von ca. 130 - 180 °C und/oder einem Druck von ca. 500 - 2.000 mbar, insbesondere ca. 1.000 mbar, und/oder der Detektion von Gasen, die den Beginn eines Thermal Runaway anzeigen, insbesondere Wasserstoff und Kohlenstoffmonoxid, öffnen und das entstehende Gas an die Umgebung der Zelle bzw. des Batteriesystems abgeben.

Vorteilhaft ist jede Lithium-Ionen-Zelle mit einem Ventil versehen, wobei das Ventil bei einem unkritischen Druck, insbesondere im Bereich von 500 - 2.000 mbar, insbesondere bei ca. 1.000 mbar, und/oder einer unkritischen Temperatur, insbesondere im Bereich von 130 - 180 °C, oder bei Detektion von speziellen Gasen, die aus dem Zellinneren der Lithium-Ionen-Zelle ausströmen, insbesondere Wasserstoff und Kohlenstoffmonoxid, öffnet.

Wenn das aus dem Zellinneren einer Lithium-Ionen-Zelle ausströmende Gas ohne ein Ventil direkt an der Zelle in den äußeren, für zumindest eine Zelle gemeinsamen Gasraum ausströmt, kann das zumindest eine Zentralventil oder eine andere Verschlusseinrichtung bei einem Druck im Bereich von 500 - 2.000 mbar multipliziert mit dem Volumenfaktor, oder bei Detektion von speziellen Gasen, die aus dem Zellinneren der Lithium-Ionen-Zelle ausströmen, wie Wasserstoff und Kohlenstoffmonoxid, öffnen. Sind für die Öffnung des Zentralventils oder einer anderen Verschlusseinrichtung Sensoren vorgesehen, werden diese vorteilhaft zwischen dem Zellinneren und dem Ventil, das über die Sensoren gesteuert wird, angeordnet.

Die Verschlusseinrichtung, insbesondere das Ventil oder Zentralventil, kann aus zumindest einer Folie bestehen, die bei erhöhtem Druck und Temperatur zerstört wird. Bei Anordnung der Folie direkt am Zellgehäuse einer Lithium-Ionen-Zelle betragen der Druck und die Temperatur, bei denen die Folie zerstört werden soll, ca. 500 - 2.000 mbar, insbesondere ca. 1.000 mbar, und/oder 130 - 180 °C, bei einer Folie für den Gasraum mehrerer Zellen ca. 500 - 2.000 mbar, insbesondere ca. 1.000 mbar, multipliziert mit dem jeweiligen Volumenfaktor des Gasraums. Vorteilhaft ist die zumindest eine Verschlusseinrichtung, insbesondere das zumindest eine Ventil oder Zentralventil, wiederverschließbar. Insbesondere schließt es bei einem Druck von etwa 50 % des Öffnungsdrucks wieder. Ein solches wiederverschließbares Ventil oder Zentralventil verschließt sich nach Öffnen und Druckentspannung wieder. Durch Vorsehen eines derartigen wiederverschließbaren Ventils oder Zentralventils kann die Lithium-Ionen-Zelle besonders leicht weiterbetrieben werden, wenn der Druckanstieg nur kurz anhält und kein weiterer Anstieg der Temperatur stattfindet, z.B. durch Verringerung der Strombelastung und/oder Maximierung der Kühlungsleistung oder bei einem ungewohnt hohen, alterungsbedingten Druckanstieg in der Lithium-Ionen-Zelle.

Weiter vorteilhaft sind Komponenten, durch die das ausströmende Gas nach Durchtritt durch die formstabile Öffnung oder Düse strömt, insbesondere das zumindest eine Ventil der zumindest einen Lithium-Ionen-Zelle, der äußere Gasraum bzw. das den äußeren Gasraum bildende Gasführungssystem, das Batteriegehäuse, das Zentralventil des äußeren Gasraums bzw. Gasführungssystems bzw. Batteriegehäuses und eine Austrittsöffnung im Batteriegehäuse so ausgebildet, dass sie einen minimalen Strömungswiderstand für den Stofftransport von der formstabilen Öffnung oder Düse bis zur zumindest einen Austrittsöffnung aufweisen. Der Querschnitt kann insbesondere zumindest das etwa Fünffache des Öffnungsquerschnitts der formstabilen Öffnung bzw. Düse betragen.

Elektrolyte und der Innenraum bzw. das Zellinnere von Lithium-Ionen-Zellen sollten aus Sicherheitsgründen vor dem Eintreten von Wasserdampf geschützt werden. Aus diesem Grund erweist es sich als vorteilhaft, auf der dem Zellinneren zugewandten Seite eines Ventils oder Zentralventils Trocknungsmittel einzubringen, die bei minimaler Undichtigkeit des Ventils das Zellinnere vor Wasserdampf aus der Umgebungsluft schützen können.

Wenn die Zellöffnung im Normalbetrieb gas- und elektrolytdicht verschlossen ist, z.B. durch eine Transportsicherung, die erst bei erhöhtem Druck und/oder Temperatur undicht wird bzw. reißt, ist es nicht erforderlich, dass der äußere Gasraum von der Umgebung getrennt oder trennbar ist. Der äußere Gasraum kann dann auch Teil der Umgebung des Batteriesystems, also nicht innerhalb von diesem, sondern außerhalb von diesem angeordnet sein. Vorteilhaft ist der äußere Gasraum so gestaltet, dass das gesamte, aus allen Lithium-Ionen-Zellen eines Batteriesystems ausströmende Gas so in den äußeren Gasraum einströmt, dass das gesamte Gas an einer Batteriesystem-Austrittsöffnung in die Umgebung gelangt. Bei ausreichendem Platz kann das über Schläuche mit großem Durchmesser erfolgen, damit auf diese Weise die Gefahr der Erwärmung benachbarter Zellen verringert wird.

Vorteilhaft ist zumindest ein Gasführungssystem vorgesehen, durch das das aus der zumindest einen formstabilen Öffnung bzw. Düse ausströmende Gas mit minimalem Druckverlust weitgehend vollständig zumindest zu der zumindest einen Austrittsöffnung geführt wird, durch die der Gas- bzw. Stofftransport an die Umgebung erfolgt bzw. erfolgen kann, wobei das Gasführungssystem nach Durchströmen des Ventils nicht vollständig gasdicht geschlossen sein muss.

Das Batteriesystem kann so kompakt aufgebaut sein, dass es zwischen den Lithium-Ionen-Einzelzellen, die innerhalb des Batteriegehäuses angeordnet sind, so gut wie keinen freien Platz gibt und das Batteriesystem im Wesentlichen nur die Dimensionen der in dem Batteriesystem aufgenommenen Lithium-Ionen-Zellen aufweist. Hierbei kann der zumindest eine äußere Gasraum, in den das in einer oder mehreren Lithium-Ionen-Zellen entstehende Gas strömt, so gestaltet sein, dass eine Umhüllung aller Lithium-Ionen-Zellen des Batteriesystems erfolgt, so dass austretendes Gas zur Vermeidung eines, die Abkühlung der Gase an der formstabilen Öffnung einer Lithium-Ionen-Zelle störenden Druckaufbaus im Wesentlichen nur durch eine Austrittsöffnung des Batteriesystems mit entsprechend großer Öffnung an die Umgebung abgeleitet werden kann.

Weiter vorteilhaft ist im Bereich der zumindest einen Austrittsöffnung zumindest ein Sensor angeordnet, der die Zusammensetzung des ausströmenden Materials, insbesondere von Lösungsmitteldämpfen und/oder Wasserstoff und/oder Kohlenstoffmonoxid, sowie Druck und Temperatur der ausströmenden Gase messen kann. Im Bereich der zumindest einen Austrittsöffnung, an der der zumindest eine äußere Gasraum mit der Batteriesystem-Umgebung verbunden oder verbindbar ist, können insbesondere alle Sensoren angeordnet sein oder werden, die ein thermisches Problem einer oder mehrerer Zellen anzeigen, z.B. Sensoren für Wasserstoff und Kohlenstoffmonoxid als die als erstes entstehenden Gase. Diese Sensoren an der zumindest einen Austrittsöffnung können identisch zu Sensoren sein, die zum Öffnen einer Verschlusseinrichtung, insbesondere eines Ventils oder Zentralventils, vorgesehen werden können.

Vorteilhaft kann ferner zumindest eine Einrichtung vorgesehen sein, durch die die aus der zumindest einen Austrittsöffnung des Batteriesystems ausströmenden Gase schnell mit der Umgebungsluft verdünnt werden. Beispielsweise kann die Einrichtung Fahrtwind bei Vorsehen des Batteriesystems in einem Fahrzeug, ein Kamineffekt aufgrund der erhöhten Temperatur der ausströmenden Gase oder ein Einblasen von Inertgas und/oder sauerstoffreduziertem Gas in das ausströmende Gas oder die Verwendung eines Gebläses sein, das Umgebungsluft in das ausströmende Gas einbläst. Die entstandenen Gase bzw. das aus den Lithium-Ionen-Zellen stammende Stoffgemisch wird/werden durch zumindest eine große Austrittsöffnung des äußeren Gasraums zur Umgebung schnell abgeführt, so dass sie verdünnt und gefahrlos abgegeben bzw. abgeleitet werden können und keine Gefahr durch exotherme Reaktionen mit der Umgebungsatmosphäre entsteht. Die zumindest eine Batteriesystem-Austrittsöffnung für das in dem zumindest einen äußeren Gasraum angesammelte Gas ist vorteilhaft so ausgebildet, dass das daraus ausströmende Gas bzw. Stoffgemisch schnell abgeführt wird, z.B. durch Nutzung des Fahrtwindes oder, sofern ein Einströmen von Luft in das noch heiße ausströmende Gas verhindert werden kann, des durch die Restwärme des ausströmenden Gases vorhandenen Kamineffekts.

Weiter vorteilhaft kann zumindest eine Einrichtung zum Spülen des zumindest einen äußeren Gasraums oder des Gasführungsystems im Anschluss an die formstabile Öffnung oder die zumindest eine Düse der zumindest einen Lithium-Ionen-Zelle und der aus der zumindest einen Austrittsöffnung des Batteriesystems ausströmenden Gase mit Inertgas oder sauerstoffreduzierter Atmosphäre vorgesehen werden, wobei die Einrichtung aktivierbar oder aktiviert ist, sobald die Temperatur des ausströmenden Gases eine Temperatur von 200 °C bzw. etwa 200 °C überschreitet. Es kann somit eine Spülung des aus der formstabilen Öffnung bzw. Düse einer jeweiligen Lithium-Ionen-Zelle und/oder der Austrittsöffnung des Batteriesystems ausströmenden Gases mit Inertgas oder sauerstoffreduzierter Atmosphäre erfolgen, sobald bei der Auswertung einer Temperaturmessung durch zumindest einen Temperatursensor festgestellt wird, dass die Temperatur des ausströmenden Gases eine Temperatur von ca. 200 °C überschreitet. Hierdurch kann die Brandgefahr weiter verringert werden.

Als besonders vorteilhaft erweist es sich, dass alle Zellen in dem Batteriesystem im Normalzustand einen gemeinsamen Gasraum aufweisen, der den äußeren Gasraum bildet und gasdicht gegen die Umgebung des Batteriesystems verschlossen oder verschließbar ist. An oder in der Batteriegehäuse-Austrittsöffnung dieses Gasraums ist vorteilhaft das Zentralventil angeordnet, das insbesondere wiederverschließbar ist. Das Zentralventil, das das Zellinnere der Lithium-Ionen-Zellen von der Umgebungsatmosphäre hermetisch abschließt, öffnet sich vorzugsweise mit einem minimalen Strömungswiderstand, sobald durch zumindest einen Sensor ein abnormer Zustand einer der Lithium-Ionen-Zellen erfasst wird.

Die Detektion von Gasen, die einen abnormen Zustand andeuten, kann vorteilhaft genutzt werden, um die Kühlleistung des Batteriesystems mit zumindest einem solchen Batteriesystem zu maximieren, den Stromfluss durch das Batteriesystem zu verringern und eine Warnmeldung auszugeben. Vorteilhaft kann ein Drucksensor installiert werden und/oder ein Sensor für das Vorhandensein von Lösungsmitteldämpfen, da damit zwar erkannt werden kann, dass ein erhöhter Druck in einer oder mehreren Lithium-Ionen-Zellen aufgetreten ist, die zu einem Thermal Runaway führenden Prozesse jedoch noch nicht begonnen haben. Auch dieses Signal kann genutzt werden, um Maßnahmen zur Erhöhung der Kühlleistung für ein Batteriesystem in Übereinstimmung mit den Anforderungen der Semenov-Theorie zu beginnen. Wie bereits erwähnt, fordert die Theorie, dass bei jeder Temperatur unterhalb einer kritischen nicht mehr beherrschbaren Temperatur die Wärmeabfuhr größer sein muss als die Wärmeerzeugungsleistung.

Durch die frühzeitige Ableitung heißer Gase aus der Lithium-Ionen-Zelle wird der Temperaturanstieg in der Lithium-Ionen-Zelle gebremst und der schnelle Anstieg der Reaktionsgeschwindigkeiten, der durch das Arheniussche Gesetz erwartet werden muss, verlangsamt. Nach dem Arheniusschen Gesetz verdoppelt sich bei einer Temperaturerhöhung um 10 K die Reaktionskonstante und damit die Austauschstromdichte. Weiter vorteilhaft kann an, auf oder in der zumindest einen Austrittsöffnung des zumindest einen äußeren Gasraums, durch die der Stofftransport an die Umgebung des Batteriesystems erfolgt, zumindest ein Filterelement vorgesehen sein, das toxische und/oder aggressive Gase bindet und Partikel, die aus dem Zellinneren mit dem Gasstrom herausgerissen werden, zurückhält. Bei der kompakten Bauweise von Batteriesystemen und der hohen Energiedichte moderner Lithium-Ionen-Zellen ist nicht auszuschließen, dass trotz der frühzeitigen Ableitung von Energie und möglicher Gegenmaßnahmen in der Lithium-Ionen-Zelle sehr hohe Temperaturen und große Gasmengen entstehen. Vorteilhaft ist es dann, an der zumindest einen Austrittsöffnung des Batteriesystems, an der das entstehende Gas aus dem zumindest einen äußeren Gasraum in die Umgebung des Batteriesystems strömt, zumindest ein Filterelement und/oder ein Filtermaterial aus nicht oder nur schwer brenn- oder entflammbarem Material anzuordnen, das die Freisetzung toxischer und korrosiver Gase vermindert. Ferner erweist es sich als vorteilhaft, die zumindest eine Batteriesystem-Austrittsöffnung sowie den zumindest einen äußeren Gasraum so auszugestalten, dass sehr heiße Partikel, die am Ende eines Thermal Runaways entstehen können und die Zündung der heißen Gase an der Umgebungsluft begünstigen, zurückgehalten werden.

Ferner erweist es sich als vorteilhaft, im zumindest einen äußeren Gasraum und in zumindest einem Schlauch mit geringem Strömungswiderstand, die die formstabile Öffnung einer jeweiligen Lithium-Ionen-Zelle mit dem zumindest einen äußeren Gasraum verbinden, nicht oder nur schwer entflammbare Absorptionsmittel einzubringen, wie z.B. Zeolith oder Aerosil, die Lösungsmitteldämpfe und die entstehenden Kohlenwasserstoffe sowie Wasserstoff und Kohlenstoffmonoxid binden. Der zumindest eine Schlauch und/oder der zumindest eine äußere Gasraum kann/können mit zumindest einem solchen Absorptionsmittel beschichtet oder anderweitig versehen sein oder werden und/oder dieses als Mantel- bzw. Wandungsmaterial umfassen. Zumindest ein solches Absorptionsmittel kann auch im Innern des zumindest einen Schlauchs oder des zumindest einen äußeren Gasraums angeordnet werden.

Bei großen Batteriesystemen, z.B. ab einem Energieinhalt von über 50 kWh, erweist es sich als weiter vorteilhaft, im zumindest einen äußeren Gasraum mit Inertgas gefüllte, an sich bekannte, Druckbehälter anzubringen, die bei einer Gastemperatur von ca. 200 - 250 °C öffnen und das aus dem zumindest einen äußeren Gasraum ausströmende Gas so weit verdünnen und kühlen, dass die exotherme Reaktion mit der Umgebungsluft reduziert wird. Bei luftgekühlten Batteriesystemen kann auch eine Erhöhung des Luftstroms vorgesehen werden, die zu einer größeren Verdünnung der brennbaren Gase beiträgt.

Die vorstehend vorgeschlagene erfindungsgemäße Lösung wird idealerweise für dafür besonders ausgebildete Lithium-Ionen-Zellen verwendet, die somit bereits bei ihrer Herstellung entsprechend ausgebildet sind. Grundsätzlich ist jedoch auch ein Nachrüsten bestehender Lithium-Ionen-Zellen möglich. Eine vorteilhafte Umsetzung kann es sein, dass zum Nachrüsten einer bestehenden Lithium-Ionen-Zelle auf eine existierende Berstöffnung dieser Zelle eine gasdicht mit der Berstöffnung verbundene formstabile Öffnung in Form einer Düse aufbringbar oder aufgebracht wird/ist und/oder neben der Berstöffnung im Zellgehäuse ein Ventil anordbar oder angeordnet wird/ist, das bei einem Druck von 500 bis 2.000 mbar, insbesondere etwa 1.000 mbar, im Innern der Lithium-Ionen-Zelle zu einer Druckentspannung der Zelle führt, und/oder eine formstabile Öffnung in Form einer Düse mit einer Verschlusseinrichtung, insbesondere einer Metallfolie als Verschlusseinrichtung, anbringbar oder angebracht wird/ist, so dass die Verschlusseinrichtung, insbesondere Metallfolie, im Bereich von 1.500 mbar bis zum üblichen Öffnungsdruck von Berstöffnungen von 6.000 - 7.000 mbar, insbesondere im Bereich von 3.000 - 5.000 mbar, öffnet und parallel dazu im Batteriegehäuse ein wiederverschließbares Ventil, das bei 500 bis 2.000 mbar, insbesondere etwa 1.000 mbar, öffnet, vorzusehen oder anzuordnen. Es geht dabei darum, dass eine Druckentlastung ermöglicht wird und auch eine Düse über der bestehenden Berstöffnung alleine sich als bereits vorteilhaft erweisen kann und anstelle einer Anordnung einer Düse und eines Ventils in Reihe hintereinander auch eine parallele Anordnung einer Düse und eines Ventils sich als vorteilhaft erweisen kann, nämlich insbesondere dann, wenn der vorhandene Platz auf einem Deckel der Lithium-Ionen-Zelle oder die Verwendung von nicht erfindungsgemäß ausgestatteten Lithium-Ionen-Zellen, die erfindungsgemäß nachgerüstet werden sollen, eine solche Anordnung sinnvoll erscheinen lässt.

Das Batteriesystem kann in unterschiedlichste Einheiten, wie Geräte, Vorrichtungen, Einrichtungen und Anlagen Verwendung finden, wie in einem Fahrzeug für den Straßenverkehr, insbesondere Pkw, Lkw oder Bus, das das zumindest eine Batteriesystem umfasst, in einem Transportmittel, das nicht für den Straßenverkehr vorgesehen ist, wie einem Schiff, Bahnfahrzeug, Fahrzeug für innerbetrieblichen Verkehr, Flugzeug, wobei das Transportmittel zumindest ein Batteriesystem umfasst, in einer stationären Energieversorgungsanlage, insbesondere einem Energiespeicher zur Sicherstellung der Stromversorgung bei Spannungsschwankungen oder zum zeitlichen Ausgleich von Angebot und Verbrauch elektrischer Energie oder einem Energiespeicher zur Versorgung von Geräten und Anlagen ohne Netzversorgung, wobei die stationäre Energieversorgungsanlage zumindest ein Batteriesystem umfasst, und/oder in einem portablen Gerät, insbesondere Kommunikations- und/oder Messgerät, wobei das portable Gerät zumindest ein Batteriesystem umfasst. Das Batteriesystem kann somit in unterschiedlichsten Einheiten verwendet werden.

Zur näheren Erläuterung der Erfindung werden im Folgenden Ausführungsbeispiele von dieser näher anhand der Zeichnungen beschrieben. Diese zeigen in:
- Figur 1: ein Schaubild der Entwicklung eines Thermal Runaways, aufgetragen als Temperatur-Zeit-Diagramm,
- Figur 2: ein Messdiagramm einer Druck- und Temperaturentwicklungsmessung, wobei Druck und Temperatur über der Zeit aufgetragen sind,
- Figur 3: eine schematische perspektivische Ansicht eines erfindungsgemäßen Batteriesystems mit einer erfindungsgemäßen Lithium-Ionen-Rundzelle, die ein festes Gehäuse aufweist,
- Figur 4: eine schematische Querschnittsansicht eines Zelldeckels einer erfindungsgemäßen Lithium-Ionen-Zelle, wobei der Zelldeckel eine von einem Folienverschluss überdeckte Öffnung und eine formstabile Öffnung in Form einer Joule-Thompson-Düse umfasst,
- Figur 5: eine schematische Ansicht eines erfindungsgemäßen Batteriesystems mit vier Lithium-Ionen-Zellen gemäß Figur 4, Schlauchleitungen als Verbindung der Lithium-Ionen-Zellen mit einem äußeren Gasraum, Sensoren, einem Zentralventil und einer Umgebung des Batteriesystems, wobei zwischen dem äußeren Gasraum und der Umgebung ein Filterelement angeordnet ist,
- Figur 6: eine schematische Querschnittsansicht eines erfindungsgemäßen Zelldeckels einer erfindungsgemäßen Lithium-Ionen-Zelle, wobei in dem Zelldeckel eine formstabile Öffnung als Joule-Thompson-Düse ausgebildet und mit einer Transportfolie verschlossen ist, die bei erhöhtem Innendruck der Lithium-Ionen-Zelle und erhöhter Temperatur zerstört wird, und
- Figur 7: eine schematische Querschnittsansicht eines erfindungsgemäßen Zelldeckels einer erfindungsgemäßen Lithium-Ionen-Zelle, wobei in dem Zelldeckel eine formstabile Öffnung als Joule-Thompson-Düse ausgebildet und mit einer Transportfolie verschlossen ist, die am Ende der Montage entfernt wird, und mit einem Ventil zur Trennung des Zellinneren der Lithium-Ionen-Zelle von deren Umgebung bzw. der Umgebung des Batteriesystems.

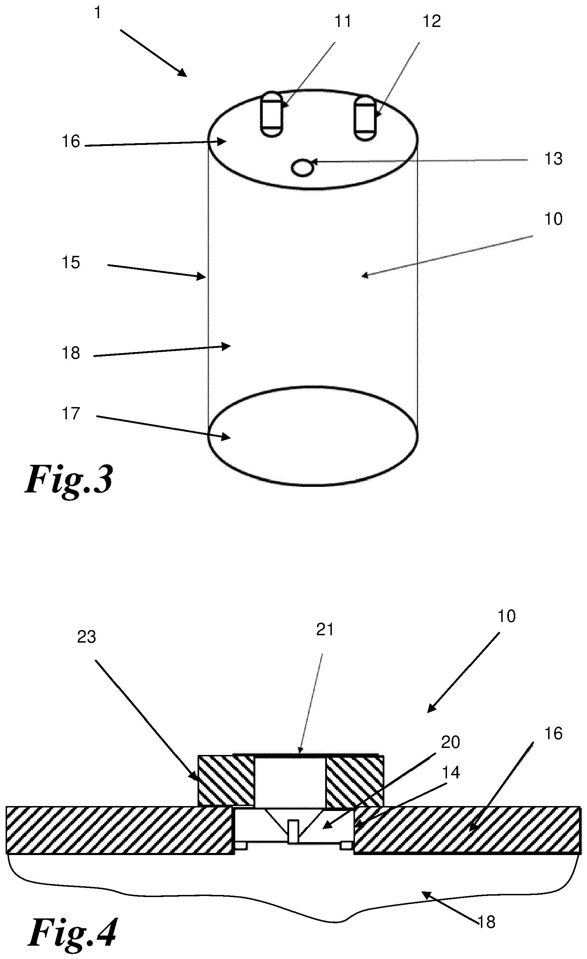

Figur 3 zeigt eine Lithium-Ionen-Zelle 10, hier ausgebildet als Rundzelle, mit einem Zellgehäuse 15, einem Zelldeckel 16 und einem Zellboden 17, wobei in dem Zelldeckel 16 zwei Pole 11 und 12 sowie ein Verschlussstopfen 13 angeordnet sind. Der Verschlussstopfen 13 verschließt eine Öffnung im Zellgehäuse 15, die am Ende der Produktion genutzt wird, um die Lithium-Ionen-Zelle 10 mit Elektrolyt zu befüllen. Bei Zellen des Standes der Technik wird in der Nähe dieser Stelle häufig eine Berstöffnung angeordnet, um den Druck durch Riss oder Bruch im Material des Verschlussstopfens bei einem Thermal Runaway abzublasen.

Diese Öffnung im Zelldeckel 16, die den Verschlusstopfen 13 aufnimmt bzw. als Berstöffnung ausgestaltet ist, ist hier erfindungsgemäß als formstabile Öffnung 14 der Lithium-Ionen-Zelle 10 ausgebildet. Die Nutzung dieser Stelle zum Anordnen der formstabilen Öffnung 14 hat den Vorteil, dass der gesamte Produktionsprozess zur Herstellung einer Lithium-Ionen-Zelle unverändert bleiben kann. Im letzten Produktionsschritt erfolgt das Umgestalten der Öffnung in die erfindungsgemäße formstabile Öffnung 14. Nach Befüllen der Lithium-Ionen-Zelle 10 mit Elektrolyt und vor einem Endtest und ggf. Laden der Lithium-Ionen-Zelle 10 sind keine weiteren Änderungen mehr erforderlich. Die formstabile Öffnung 14 wird an ihrem Umfang hermetisch dicht mit dem Zellgehäuse 15 verbunden, z.B. durch Verpressen oder Verkleben.

Die Lithium-Ionen-Zelle 10 ist Teil eines Batteriesystems 1. Dieses umfasst zumindest einen äußeren Gasraum 2, der außerhalb der Lithium-Ionen-Zelle 10 angeordnet ist. In Figur 4 ist die formstabile Öffnung 14 im Zelldeckel 16 der Lithium-Ionen-Zelle 10 gezeigt. Die formstabile Öffnung 14 im Zelldeckel 16 ist anstelle des Verschlussstopfens 13 mit einer gut wärmeleitend ausgebildeten, z.B. metallischen, Düse 20 versehen, die gasdicht und gut wärmeleitend in den Zelldeckel 16 eingebracht ist. Gasdicht bedeutet, dass ein Gasdurchtritt somit nur durch die Düse 20 hindurch möglich ist. Die Düse 20 ist dabei so angeordnet, dass aus dem Zellinneren 18 als innerem Gasraum durch die Düse 20 in den äußeren Gasraum 2 strömendes Gas expandieren und abkühlen kann. Entsprechende Düsenformen, die die Wirkung des Joule-Thompson-Effekts besonders gut nutzen, sind im Stand der Technik bekannt oder können entsprechend ausgebildet werden. Zum Verbinden der Düse 20 mit Anschlüssen zum äußeren Gasraum 2 ist ein Ansatzstück 23 vorgesehen. Die Düse 20 überdeckend, mit Abstand zu dieser ist eine Transportfolie 21 vorgesehen und auf das Ansatzstück 23 aufgefügt, die bei Montage der Lithium-Ionen-Zellen 10 in einem Batteriesystem 1 entfernt wird.

Bei Pouchzellen wird nach Einfüllen des Elektrolyts die hermetisch dichte Verschweißung der die Zelle umgebenden Folien durchgeführt. Vorteilhaft wird die formstabile Öffnung 14 mit der Düse 20 direkt an dieser Schweißnaht der Folien eingebracht.

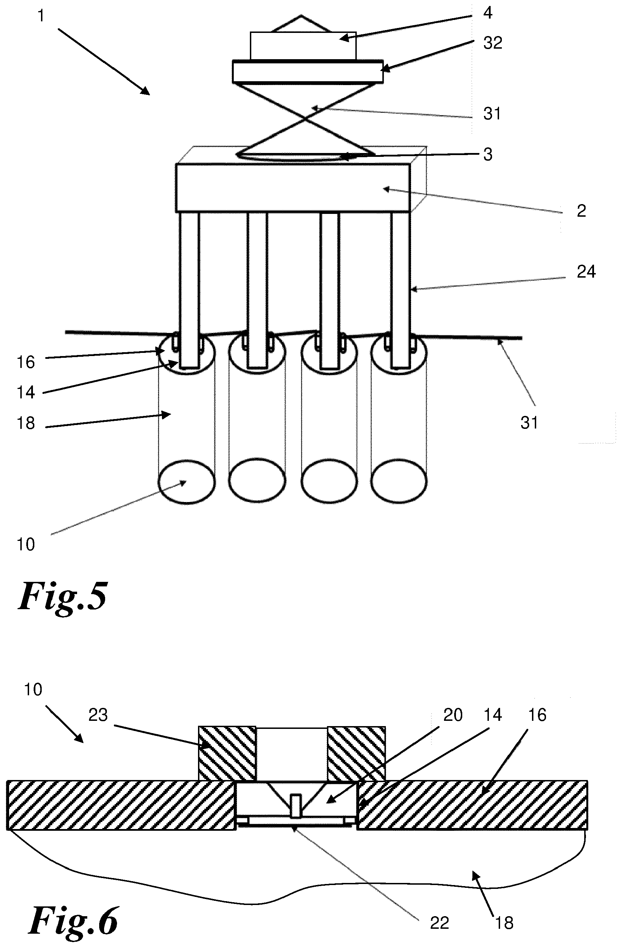

Wie der Skizze in Figur 5 zu entnehmen ist, kann das nach Entfernen der Transportfolie 21 durch die Düse 20 ausströmende Gas durch eine Schlauchleitung 24 zu dem äußeren Gasraum 2 geführt werden, wobei das Schlauchleitungsvolumen bereits als Teil des äußeren Gasraums 2 definiert wird. Zur gegenüber der Umgebung gasdichten Verbindung der Schlauchleitung 24 mit der Düse 20 dient ein Ansatzstück 23. Anstelle einer Schlauchleitung kann z.B. ein Formteil verwendet werden, das einen zur Umgebung gasdichten äußeren Gasraum bildet, und durch das das ausströmende Gas zu einer Austrittsöffnung 3 strömt. Die Austrittsöffnung 3 ist mittels eines Zentralventils 31, das einen zumindest etwa 5-fachen Öffnungsquerschnitt im Vergleich zu der Düse 20 aufweist, gegen die das Batteriesystem 1 umgebende Umgebung 4 verschlossen. Das Zentralventil 31 wird entweder durch ansteigenden Druck und/oder ansteigende Temperatur oder durch Steuersignale auf Basis von Sensormesswerten geöffnet, wobei Sensoren im äußeren Gasraum 2 angeordnet sein können.

Die Druckerhöhung im äußeren Gasraum 2, Zunahme der Gastemperatur und die Analyse der Gaszusammensetzung zeigen sehr früh den Beginn eines Thermal Runaways an und lassen auch eine Bewertung zu. Eine Druckerhöhung gekoppelt mit einer hohen Konzentration an Wasserstoff und/oder Kohlenwasserstoffmonoxid deuten auf massive Zersetzungsreaktionen in der Lithium-Ionen-Zelle 10 hin, eine Druckerhöhung mit geringerer bzw. vernachlässigbarer Konzentration von Wasserstoff und Kohlenwasserstoffmonoxid dagegen auf eine lokale Temperaturerhöhung, die ggf. durch den Lösungsmitteldampfdruck mit verursacht wird und ein frühes Stadium eines Thermal Runaways bedeutet.

Das Zentralventil 31 öffnet und gibt die entstehenden Gase über ein Filterelement 32 an die Umgebung 4 ab.

Auf Basis der Sensorsignale können unmittelbar Gegenmaßnahmen getroffen werden. So können z.B. die Kühlleistung für die Lithium-Ionen-Zellen maximiert, der Stromdurchsatz durch die Lithium-Ionen-Zellen verringert (Reduzierung der Rückspeiseleistung, Beschränkung der entnehmbaren Leistung) und eine Warnung an einen Fahrer eines Fahrzeugs oder Transportmittels, in dem das Batteriesystem 1 angeordnet ist, bzw. Betriebspersonal im Umfeld des Batteriesystems 1 ausgegeben werden.

Bei einem verminderten Druck und reduzierter Temperatur ist es gefahrlos möglich, die entstehenden Gase aus dem äußeren Gasraum 2 an die Umgebung 4 abzugeben, so dass auch bei weiterer Druck- und Temperaturerhöhung in einer Lithium-Ionen-Zelle die Freisetzungsrate an heißem, an der Luft entflammbarem Gas vermindert bzw. vermieden wird.

Aus Sicherheitsgründen wird jedoch davon ausgegangen, dass unter ungünstigen Randbedingungen der Verlauf eines Thermal Runaway nur verzögert und gemildert werden kann, dass aber dennoch so hohe lokale Temperaturen auftreten können, dass toxische Stoffe in der Lithium-Ionen-Zelle entstehen und an die Umgebung gelangen können, insbesondere Fluorverbindungen und organische Phosphorverbindungen. Aus diesem Grund kann an der Austrittsöffnung 3, an der der äußere Gasraum 2 mit der Umgebung 4 verbunden ist, Filtermaterial aus nicht brennbarem Material, z.B. Aerosil oder Zeolith, vorgesehen sein, das bei minimalem Druckwiderstand einen Teil dieser Gase sowie ggf. Lösungsmitteldämpfe und Anderes zumindest teilweise absorbieren kann. Auf diese Art und Weise werden Gefahrenpotentiale für die Umgebung des Batteriesystems 1 mit zumindest einer Lithium-Ionen-Zelle 10 weiter verringert.

Als sinnvoll erweist es sich auch, das im Bereich der Austrittsöffnung 3 des äußeren Gasraums 2 verwendete oder an dieser selbst angeordnete Filtermaterial so zu gestalten, dass sehr heiße Partikel, die bei einem Thermal Runaway aus der Lithium-Ionen-Zelle mitgerissen werden, zurückgehalten und somit die Gefahr einer Entzündung der Gase an Luft verhindert werden können. Der vorteilhaft große Querschnitt der Austrittsöffnung 3 zwischen äußerem Gasraum 2 und der Umgebung 4 führt dazu, dass die lokale Konzentration der dort austretenden Gase in der Umgebungsluft reduziert wird. Ferner kann durch konstruktive Maßnahmen das austretende Gas schnell abgeführt werden, z.B. durch eine, durch den Fahrtwind verursachte Luftströmung oder die natürliche Strömungsrichtung heißer Gase nach oben.

Das Ausströmen der entstehenden Gase aus der Lithium-Ionen-Zelle erfolgt vorteilhaft spätestens bei einer Temperatur von ca. 130 °C - 180 °C bzw. einem Druck von ca. 500 - 2.000 mbar, bevorzugt ca. 1.000 mbar, in der Lithium-Ionen-Zelle 10. Durch den Joule-Thompson-Effekt der Düse 20 reduzieren sich die Temperatur und der Druck. Aus diesem Grunde ist es sinnvoll, dass das Zentralventil 31 sensorgesteuert geöffnet wird, wobei der Zeitpunkt in Abhängigkeit vom Volumen und weiteren externen Bedingungen leicht berechnet werden kann.

Das Zentralventil 31 vor der Austrittsöffnung 3 ist wiederverschließbar, um das Batteriesystem 1 weiterbetreiben zu können, wenn es nur kurzfristig zur Überschreitung von vorgebbaren Druck- und Temperaturgrenzwerten kommt. Um sicherzustellen, dass kein Wasserdampf durch Restundichtigkeiten des Zentralventils 31 in den äußeren Gasraum 2 und damit in das Zellinnere 18 gelangt, kann in diesem Bereich zwischen Zentralventil 31 und Zellinnerem 18 zumindest ein Trocknungsmittel eingebracht werden (in den Figuren nicht gezeigt).

Die Abkühlung des Gases hat mehrere Wirkungen. Erstens wird die Lithium-Ionen-Zelle 10 an der formstabilen Öffnung 14, an der die Gase ausströmen, lokal gekühlt, was den Zeitpunkt des Überschreitens kritischer Temperaturen der ausströmenden Gase verzögert. Zugleich wird durch die Ableitung des heißen Gases der Lithium-Ionen-Zelle 10 Energie entzogen, so dass die Reaktionsgeschwindigkeiten von unerwünschten Zersetzungsreaktionen vermindert werden.

Trotz der bereits erfolgten Abkühlung der ausströmenden Gase kann sich die Verwendung von Materialien, die eine erhöhte Wärmebeständigkeit und Wärmekapazität haben, für die Schlauchleitungen 24, die in Figur 5 gezeigt sind, und den äußeren Gasraum 2 als vorteilhaft erweisen.

Bei der in Figur 5 gezeigten Ausführungsform des Batteriesystems 1 kann das ausströmende warme Gas die benachbarten Lithium-Ionen-Zellen 10 nicht in gleichem Maße erwärmen, wie das bei der Verwendung einer bekannten Berstöffnung und Ausströmen sehr heißer Gase der Fall ist. Dadurch kann die Gefahr eines Thermal Runaway benachbarter Lithium-Ionen-Zellen 10 reduziert werden.

In dem Gasraum 2 können unterschiedliche Sensoren angeordnet werden oder sein, mit denen detektiert werden kann, dass eine Lithium-Ionen-Zelle 10 Gas emittiert. Bei Nutzung vieler Sensoren an verschiedenen Stellen kann auch festgestellt werden, welche Lithium-Ionen-Zelle 10 oder in welcher Gruppe von Lithium-Ionen-Zellen 10 die Gasemission stattgefunden hat.

Bei großen Batteriesystemen 1 mit einer großen Anzahl an Lithium-Ionen-Zellen 10 und mit sehr hohen Sicherheitsanforderungen kann es zusätzlich sinnvoll sein, das im äußeren Gasraum 2 vorhandene und/oder aus dem äußeren Gasraum 2 entweichende Gas mit Inertgas oder sauerstoffreduzierter Luft aus einem separaten Behälter, der bei Überschreiten von vorgebbaren Druck- und Temperaturgrenzen geöffnet wird, weiter zu verdünnen. Auch die Maximierung des Luftstroms durch ein Gebläse, z.B. bei Verwendung eines luftgekühlten Batteriesystems, verdünnt die brennbaren Gase und kühlt sie ab.

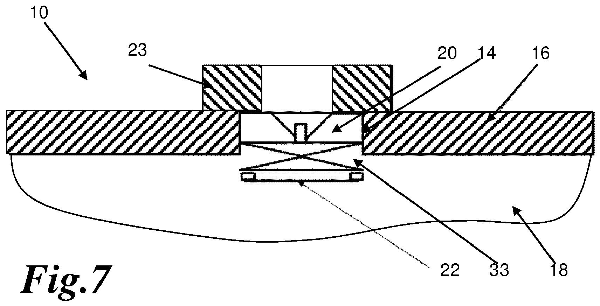

Die Figuren 6 und 7 zeigen eine alternative Ausgestaltung der erfindungsgemäßen Lithium-Ionen-Zelle 10. In Figur 6 ist unterhalb der Düse 20, also in Richtung des Zellinnern 18 der Lithium-Ionen-Zelle 10 mit Abstand von z.B. 1 bis 2 mm zu der Düse 20 die Transportfolie 22 angeordnet, die als Transportsicherung bis zur Montage der Lithium-Ionen-Zelle 10 in dem Batteriesystem 1 dient und die gas- und elektrolytdicht ist. Die Transportfolie 22 besteht entweder aus einem Material, das zu einer Zerstörung der Transportfolie 22 als Gasbarriere bei erhöhtem Druck und/oder erhöhter Temperatur, z.B. 130° - 180°C und/oder 500 bis 2.000 mbar, insbesondere ca. 1.000 mbar, führt und somit wie ein Ventil wirkt, oder die Transportfolie 22 wird bei der Montage entfernt oder durchstoßen und die Trennung des Zellinneren 18 von der Umgebung 4 erfolgt anschließend durch ein Ventil 33, das unterhalb der Düse 20, also benachbart zu dieser in Richtung des Zellinneren 18, angeordnet ist. Dies ist in Figur 7 dargestellt. Die Transportfolie 22 zerreißt so, dass das entstehende Gas über die Düse 20 entweichen kann.

Das Ventil 33 kann z.B. aus einer bekannten vorgespannten Elastomermembran bestehen, deren Öffnungsdruck je nach Konstruktion und Materialauswahl im Bereich von ca. 500 - 2.000 mbar bzw. anderen Drücken, insbesondere etwa 1.000 mbar, eingestellt werden kann. Nach Druckabbau verschließt sich das Ventil wieder gasdicht.

Ob das ausströmende Gas erst durch die Düse 20, die als Joule-Thompson-Düse bezeichnet werden kann, und dann durch das Ventil 33 strömt, so wie in Figur 7 dargestellt, oder erst durch das Ventil 33 und dann die Düse 20 ist grundsätzlich unerheblich. Allerdings kann hierüber der Strömungswiderstand nach Durchtritt durch die Düse 20 und bei thermisch gut leitender Verbindung der Düse 20 mit dem Zellgehäuse 15 optimiert werden. Allerdings ist die Anordnung erst des Ventils 33 und dann der Düse 20 einfacher umzusetzen, da der Druck, bei dem das Ventil 33 öffnet, leichter eingestellt werden kann. Die als Düse 20 bzw. Joule-Thomson-Düse ausgebildete formstabile Öffnung 14 und das Ventil 33 können eine integrale Einheit bilden. Die Düse 20 und das Ventil 33 können in Reihe hintereinander oder auch parallel zueinander angeordnet werden.

Zur weiteren Reduzierung des Risikos einer exothermen Reaktion des ausströmenden Gases mit der Umgebung 4 kann der äußere Gasraum 2, wie in Figur 5 dargestellt, durch die Schlauchleitungen 24 von den Düsen 20 ausgehend gebildet werden oder es wird unter Verwendung eines Formteils ein äußerer Gasraum 2 geschaffen, so dass die Sauerstoffmenge im äußeren Gasraum 2 reduziert ist, wobei der Strömungswiderstand im äußeren Gasraum 2 dadurch nicht oder nur sehr geringfügig reduziert wird. Die Gestaltung dieses Formteils und die Auswahl von dessen Material können z.B. so erfolgen, dass das austretende Gas so strömt, als ob es in Schlauchleitungen großen Durchmessers geleitet würde. Das Material des Formteils ist dabei vorteilhaft ein nicht oder nur schwer brenn- bzw. entflammbares Material. Es ist nicht erforderlich, dass der äußere Gasraum 2 in diesem Fall gasdicht von der Umgebung 4 getrennt ist, da die Trennung bereits unmittelbar im Bereich der Düse 20 erfolgt.

Die Verwendung von Schlauchleitungen bzw. entsprechenden Formteilen zwischen den formstabilen Öffnungen 14 und der äußeren Austrittsöffnung 3 des Batteriesystems 1 erhöht die Empfindlichkeit der Detektion, da die Analyse weitgehend geschützt vor Durchmischung mit der die Lithium-Ionen-Zellen 10 umgebenden Atmosphäre erfolgen kann.

Die vorstehend beschriebene Anordnung von Sensoren zur Detektion von abnormen Bedingungen, die Verwendung von Filterelementen, die Verdünnung der ausströmenden Gase mit Inertgas und die schnelle Abfuhr der Gase, so wie sie vorstehend bereits beschrieben sind, können bei allen Ausführungsvarianten vorteilhaft verwendet werden.

Das Batteriesystem 1 kann somit entweder auf der Düse 20 die Transportfolie 21, die bei Inbetriebnahme durchlöchert wird, aufweisen, wobei der Weg des Gases dann durch die Düse 20, eine geschlossene Gasführung und den äußeren Gasraum 2 zu der Austrittsöffnung 3 führt. Sensoren können an der Austrittsöffnung 3 vorgesehen sein, ebenso ein Zentralventil 31 und ggf. ein Filterelement 32. Es erfolgt eine Verdünnung des ausströmenden Materials. Oder es ist auf der Düse 20 die Transportfolie 22 angeordnet, die bei Inbetriebnahme durchlöchert oder entfernt wird, ferner das Ventil 33, die Düse 20 und eine Gasführung vorgesehen, wobei das Gas danach zum äußeren Gasraum 2 und anschließend zu der Austrittsöffnung 3 gelangt. Sensoren können wiederum an der Austrittsöffnung 3 angeordnet sein, ebenso das Filterelement 32. Es erfolgt eine Verdünnung des ausströmenden Materials. Die Reihenfolge der Anordnung kann auch umgekehrt, also erst die Düse 20 und dann das Ventil 33, sein. Oder es kann die Transportfolie 22 vorgesehen sein, die bei Druck- oder Temperaturanstieg zerstört wird und als Ventil fungiert, wobei der Weg des Gases durch die Düse 20, den äußeren Gasraum 2 und eine Gasführung zu der Austrittsöffnung 3 führt. Wiederum können Sensoren im Bereich oder an der Austrittsöffnung 3 vorgesehen sein, ebenso das Filterelement 32. Auch hierbei erfolgt eine Verdünnung des ausströmenden Materials, wobei auch hier wiederum die Reihenfolge von Düse und Ventil umgekehrt sein kann, also zunächst die Düse 20 und dann das Ventil 33 vorgesehen sein kann.

Ferner ist es möglich und je nach Ausführung, also unter bestimmten konstruktiven Vorgaben, sinnvoll, das wiederverschließbare Ventil 33 parallel zu der formstabilen, als Düse ausgestalteten Öffnung zu platzieren, wobei dann die formstabile Öffnung 14 mit einer, vom Ventil 33 unabhängigen Verschlusseinrichtung, idealerweise eine Folie, abgedichtet wird, deren Öffnungsdruck über dem Öffnungsdruck des Ventils 33 liegt.

Es kann sowohl ein eine Einheit für die Elektrizitätswirtschaft zur Überbrückung von Spannungseinbrüchen oder zum zeitlichen Ausgleich von Stromproduktion und Stromverbrauch, eine Einheit, wie ein Fahrzeug, z.B. ein Pkw, ein Lkw, ein Bus, oder ein nicht für den Straßenverkehr vorgesehenes Transportmittel, wie ein Schiff, ein Bahnfahrzeug, ein Fahrzeug für den innerbetrieblichen Verkehr eines Unternehmens, ein Flugzeug, oder ein portables Gerät mit zumindest einem solchen Batteriesystem 1 versehen werden.

Es wird somit eine Möglichkeit zur Verringerung des Brandrisikos von Lithium-Ionen-Zellen bzw. Batteriesystemen durch Ableiten der entstehenden Gase bei geringem Druck und Nutzung der Kühlwirkung des Joule-Thompson-Effekts geschaffen. Hierbei können insbesondere auch abnorme Betriebszustände durch Bereitstellung eines äußeren Gasraums für eine oder mehrere Lithium-Ionen-Zellen des Batteriesystems, in den die bei Beginn eines Thermal Runaways entstehenden Gase strömen können, frühzeitig erkannt, durch Nutzung des Joule-Thompson-Effekts abgekühlt und nach Analyse gefahrlos an die Umgebung abgegeben werden, wobei im ungestörten Betrieb entweder jede Lithium-Ionen-Zelle mit einem eigenen Ventil zur Trennung des Zellinneren von der Umgebung oder der äußere Gasraum mit einem Zentralventil zur Trennung des Zellinneren vieler Zellen eines Moduls bzw. eines Batteriesystems von der Umgebung ausgestattet ist/sind oder wird/werden. Austretende Gase können dadurch detektiert, bewertet und Gegenmaßnahmen eingeleitet werden.

In Versuchen mit einer in der Automobilindustrie verwendeten Lithium-Ionen-Zelle mit einer Kapazität von 27 Ah, die durch langsames kontinuierliches Hochheizen zu einem Thermal Runaway getrieben wurde, hat sich die deutliche Verbesserung der Sicherheitseigenschaften bei frühzeitiger Druckentlastung gezeigt. Vergleichen wurden eine nicht erfindungsgemäß ausgerüstete Lithium-Ionen-Zelle und eine erfindungsgemäß ausgebildete Lithium-Ionen-Zelle, bei der die Befüllöffnung (ca. 1,5 mm Durchmesser) geöffnet wurde und mit einem Messblock gasdicht verbunden wurde. In dem Messblock befand sich ein elektromagnetisches Ventil, ein Drucksensor und ein Thermoelement. Ferner wurde an mehreren Stellen die Temperatur des Zellgehäuses gemessen sowie die Temperatur der Gase, die nach Öffnen der Berstöffnung aus der Zelle austraten. Die folgende Tabelle zeigt die wichtigsten sicherheitsrelevanten Unterschiede zweier Versuche V1 und V3, wobei in einem Fall (Versuch V3) die Druckentlastung bei 130 °C und ca. 1.000 mbar erfolgte. Es ist eindeutig zu sehen, dass bei der Lithium-Ionen-Zelle mit frühzeitiger Druckentlastung der Thermal Runaway erst bei deutlich höherer Zelltemperatur, längerer Hochheizzeit und deutlich größerer, von außen zugeführter Energiemenge erfolgte, alle sonstigen sicherheitsrelevanten Werte (maximale Temperatur des Zellgehäuses und maximale Gastemperatur, insgesamt aufgetretener Masseverlust) deutlich bessere Werte zeigten. Die Tatsache, dass es trotz der frühen Druckentlastung zum Öffnen der Berstöffnung kam, ist der Tatsache geschuldet, dass die Öffnung, die für die Druckentlastung genutzt wurde, nur ca. 5 % des Querschnitts der Berstöffnung betrug. Zu beachten ist auch, dass der geringere Masseverlust der Lithium-Ionen-Zelle mit frühzeitiger Druckentlastung bereits eine verbesserte Einstufung dieser Lithium-Ionen-Zelle bzgl. der für den Transport von Lithium-Ionen-Batterien geltenden Vorschriften geführt hätte.

| | Versuch V1 | Versuch V3 Öffnung bei 130 °C und ca. 1.000 mbar |
|---|---|---|
| TR Starttemperatur in °C | 178 | 217 |
| T_max Zelle in °C | 644 | 543 |
| T_max Abgas in °C | 683 | 504 |
| T_Zelle bei Berstöffnung in °C | 158 | 215 |
| Gesamte Heizenergie in Wh | 712 | 1.175 |
| Massenverlust Δm in g | 329,2 | 176,8 |
| Massenverlust in % (Δm/m_Zelle) | 40,6 | 21,8 |
| Umgebungstemperatur in °C | 6 | 7 |

Neben den im Vorstehenden beschriebenen und in den Figuren gezeigten Ausführungsformen von Batteriesystemen mit zumindest einer Lithium-Ionen-Zelle mit Komponenten zur frühzeitigen und gefahrlosen Entfernung von Gasen und deren Kühlung durch Nutzung des Joule-Thomson-Effekts aus einer Lithium-Ionen-Zelle sowie Verfahren zur Detektierung der Gase und Einleitung von Gegenmaßnahmen können noch zahlreiche weitere gebildet werden, auch beliebige Kombinationen der genannten Merkmale, wobei die zu Beginn eines Thermal Runaways entstehenden Gase so frühzeitig wie möglich an die Umgebung abgegeben werden, so dass das Risiko einer Entzündung an der Umgebungsatmosphäre minimiert wird. Durch eine andere Anordnung der beschriebenen Komponenten können die entstehenden Gase diese Komponenten auf dem Weg von der Lithium-Ionen-Zelle an die Umgebung in anderer Reihenfolge durchströmen. Auch eine Anordnung der Düse innerhalb des Wickelkerns von Rundzellen oder prismatischen Zellen ist bei geringfügiger Umgestaltung des Zellgehäuses, insbesondere des Bodens des Zellgehäuses, eine vorteilhafte Ausgestaltung des erfindungsgemäßen Batteriesystems.

### Bezugszeichenliste

- 1: Batteriesystem
- 2: äußerer Gasraum
- 3: Austrittsöffnung
- 4: Umgebung
- 10: Lithium-Ionen-Zelle
- 11: erster Pol
- 12: zweiter Pol
- 13: Verschlussstopfen
- 14: formstabile Öffnung
- 15: Zellgehäuse
- 16: Zelldeckel
- 17: Zellboden
- 18: Zellinneres
- 20: Düse
- 21: Transportfolie
- 22: Transportfolie
- 23: Ansatzstück
- 24: Schlauchleitung
- 31: Zentralventil
- 32: Filterelement
- 33: Ventil der Lithium-Ionen-Zelle

## Patentansprüche

1. Batteriesystem (1) mit zumindest einer Lithium-Ionen-Zelle (10), wobei die zumindest eine Lithium-Ionen-Zelle (10) zumindest ein Zellgehäuse (15) aufweist, das das Zellinnere (18) der Lithium-Ionen-Zelle (10) ummantelt, **dadurch gekennzeichnet, dass**
das zumindest eine Zellgehäuse (15) der zumindest einen Lithium-Ionen-Zelle (10) zumindest eine formstabile Öffnung (14) aufweist und das Batteriesystem (1) zumindest einen, durch einen Behälter oder ein Gasführungssystem gebildeten äußeren geschlossenen Gasraum (2) umfasst, wobei der Behälter gasdicht mit dem Zellinneren (18) der zumindest einen Lithium-Ionen-Zelle (10) verbunden ist, wobei
a) im Normalbetrieb ein Gas- und/oder Stofftransport durch die zumindest eine formstabile Öffnung (14) zwischen dem Zellinneren (18) als innerem Gasraum und dem zumindest einen äußeren Gasraum (2) vorgesehen ist und
b) bei Druckanstieg im Zellinneren (18) durch Nutzung des Joule-Thomson-Effekts an der zumindest einen formstabilen Öffnung (14) das ausströmende Gas sowie das Zellgehäuse (15) abkühlbar ist oder gekühlt wird, und
c) ein Zentralventil (31) im Behälter vorgesehen ist, das einen durch das Zellinnere (18) als innerem Gasraum und den äußeren Gasraum (2) gebildeten Raum im Normalbetrieb von der Umgebung (4) des Batteriesystems (1) abtrennt und bei Druckanstieg in dem Zellinneren (18) der Lithium-Ionen-Zelle (10) öffnet.

2. Batteriesystem (1) nach Anspruch 1,
**dadurch gekennzeichnet, dass**
die formstabile Öffnung (14) zur Kühlung eines ausströmenden Gases und zur Optimierung des Joule-Thompson-Effekts als Düse ausgebildet ist oder mit zumindest einer Düse (20) versehbar oder versehen ist, und die zumindest eine Düse (20) aus zumindest einem Material mit einer Wärmeleitfähigkeit von zumindest 15 W/(m²K) besteht oder dieses umfasst und mit dem umgebenden Material des zumindest einen Zellgehäuses (15) der Lithium-Ionen-Zelle (10) verbindbar oder verbunden ist oder die zumindest eine Düse (20) als integraler Bestandteil des Zellgehäuses (15) der Lithium-Ionen-Zelle (10) ausgebildet ist.

3. Batteriesystem (1) nach Anspruch 1 oder 2,
**dadurch gekennzeichnet, dass**
der zumindest eine äußere Gasraum (2) als geschlossener, das Zellinnere (18) zumindest einer Lithium-Ionen-Zelle (10) einschließender Gasraum ausgebildet ist, insbesondere bei Vorsehen zumindest zweier Lithium-Ionen-Zellen (10) als gemeinsamer geschlossener Gasraum der zumindest zwei Lithium-Ionen-Zellen (10) ausgebildet ist, wobei das aus der formstabilen Öffnung (14) einer Lithium-Ionen-Zelle (10) ausströmende Gas vollständig in den äußeren Gasraum (2) einströmt.

4. Batteriesystem (1) nach Anspruch 1, 2 oder 3,
**dadurch gekennzeichnet, dass**
der äußere Gasraum (2) und/oder das Gasführungssystem von einem Batteriegehäuse umgeben oder von einem Batteriegehäuse gebildet ist.

5. Batteriesystem (1) nach Anspruch 3 oder 4,
**dadurch gekennzeichnet, dass**
in dem zumindest einen Batteriegehäuse oder dem zumindest einen äußeren Gasraum (2) zumindest eine Verschlusseinrichtung, insbesondere das Zentralventil (31), angeordnet ist, so dass der zumindest eine äußere Gasraum (2) durch die zumindest eine Verschlusseinrichtung, insbesondere das zumindest eine Zentralventil (31), von einer das Batteriesystem (1) umgebenden Umgebung (4) getrennt ist.

6. Batteriesystem (1) nach einem der vorstehenden Ansprüche,
**dadurch gekennzeichnet, dass**
in dem Zellgehäuse (15) der Lithium-Ionen-Zelle (10) zumindest eine Verschlusseinrichtung, insbesondere ein Ventil (33), angeordnet ist, so dass das Zellinnere (18) der Lithium-Ionen-Zelle (10) des Batteriesystems (1) von der die Lithium-Ionen-Zelle (10) umgebenden Umgebung (4) getrennt oder trennbar ist.

7. Batteriesystem (1) nach einem der Ansprüche 5 oder 6,
**dadurch gekennzeichnet, dass**
die zumindest eine Verschlusseinrichtung, insbesondere das zumindest eine Zentralventil (31) oder das zumindest eine Ventil (33) einer Lithium-Ionen-Zelle (10), so ausgebildet oder in dem zumindest einen äußeren Gasraum (2) und/oder Gasführungssystem oder dem Batteriegehäuse angeordnet ist, dass es bei Druckerhöhung und/oder Temperaturerhöhung oder bei Detektion zumindest eines vorgebbaren, aus der zumindest einen Lithium-Ionen-Zelle (10) ausströmenden Gases, insbesondere Wasserstoff und Kohlenstoffmonoxid, öffnet.

8. Batteriesystem (1) nach einem der vorstehenden Ansprüche,
**dadurch gekennzeichnet, dass**
Komponenten, durch die das ausströmende Gas nach Durchtritt durch die formstabile Öffnung (14) oder Düse (20) strömt, insbesondere das zumindest eine Ventil (33) der zumindest einen Lithium-Ionen-Zelle (10), der äußere Gasraum (2) bzw. das den äußeren Gasraum bildende Gasführungssystem, das Zentralventil (31) des äußeren Gasraums und eine Austrittsöffnung (3) im Batteriegehäuse so ausgebildet sind, dass sie einen minimalen Strömungswiderstand für den Stofftransport von der formstabilen Öffnung (14) oder Düse (20) bis zur zumindest einen Austrittsöffnung (3) aufweisen, insbesondere, dass der Querschnitt zumindest das Fünffache des Öffnungsquerschnitts der formstabilen Öffnung (14) bzw. Düse (20) beträgt.

9. Batteriesystem (1) nach einem der Ansprüche 6 bis 8,
**dadurch gekennzeichnet, dass**
jede Lithium-Ionen-Zelle (10) mit einem Ventil (33) versehen ist, wobei das Ventil (33) bei einem unkritischen Druck, insbesondere im Bereich von 500 - 2.000 mbar, insbesondere 1.000 mbar, und/oder einer unkritischen Temperatur, insbesondere im Bereich von 130 - 180 °C, oder bei Detektion von speziellen Gasen, die aus dem Zellinneren (18) der Lithium-Ionen-Zelle (10) ausströmen, insbesondere Wasserstoff und Kohlenstoffmonoxid, öffnet.

10. Batteriesystem (1) nach Anspruch 9,
**dadurch gekennzeichnet, dass**
die als Düse ausgebildete formstabile Öffnung (14) und das Ventil (33) eine integrale Einheit bilden.

11. Batteriesystem (1) nach einem der Ansprüche 5 bis 10,
**dadurch gekennzeichnet, dass**
das im zumindest einen äußeren Gasraum (2) oder Batteriegehäuse vorgesehene Zentralventil (31) bei einem unkritischen Druck, insbesondere im Bereich von 500 - 2.000 mbar, insbesondere 1.000 mbar, multipliziert mit einem Volumenfaktor, der sich aus dem Verhältnis von Gasvolumen im Inneren der Lithium-Ionen-Zelle (10) und dem Volumen des äußeren Gasraums oder des Batteriegehäuses ergibt, und/oder einer unkritischen Temperatur, insbesondere im Bereich von 130 - 180 °C, oder bei Detektion von speziellen Gasen, die aus dem Zellinneren (18) der Lithium-Ionen-Zelle (10) ausströmen, insbesondere Wasserstoff und Kohlenstoffmonoxid, öffnet.

12. Batteriesystem (1) nach einem der Ansprüche 5 bis 11,
**dadurch gekennzeichnet, dass**
die zumindest eine Verschlusseinrichtung, insbesondere das zumindest eine Ventil (33) oder Zentralventil (31), wiederverschließbar ist, wobei es insbesondere bei einem Druck von 50 % des Öffnungsdrucks wieder schließt.

13. Batteriesystem (1) nach einem der Ansprüche 5 bis 12,
**dadurch gekennzeichnet, dass**
die Verschlusseinrichtung, insbesondere das Zentralventil (31) und/oder das Ventil (33) einer Lithium-Ionen-Zelle (10), aus zumindest einer Folie besteht, die bei erhöhtem Druck und Temperatur zerstört wird, insbesondere bei einer Folie einer Lithium-Ionen-Zelle (10) einem Druck im Bereich von 500 - 2.000 mbar, insbesondere 1.000 mbar, und/oder einer Temperatur im Bereich von 130 - 180 °C, bei einer Folie für den Gasraum mehrerer Lithium-Ionen-Zellen (10) im Bereich von 500 - 2.000 mbar multipliziert mit dem Volumenfaktor des Gasraums.

14. Batteriesystem nach einem der vorstehenden Ansprüche,
**dadurch gekennzeichnet, dass**
das Gasführungssystem so ausgebildet ist, dass durch diese das aus der zumindest einen formstabilen Öffnung (14) bzw. Düse (20) ausströmende Gas mit minimalem Druckverlust weitgehend vollständig zu der zumindest einen Austrittsöffnung (3) geführt wird, durch die der Gas- bzw. Stofftransport an die Umgebung erfolgt.

15. Batteriesystem (1) nach einem der vorstehenden Ansprüche,
**dadurch gekennzeichnet, dass**
zum Nachrüsten einer bestehenden Lithium-Ionen-Zelle auf eine existierende Berstöffnung dieser Zelle eine gasdicht mit der Berstöffnung verbundene formstabile Öffnung in Form einer Düse aufbringbar oder aufgebracht und/oder neben der Berstöffnung im Zellgehäuse ein Ventil anordbar oder angeordnet ist, das bei einem Druck von 500 bis 2.000 mbar, insbesondere 1.000 mbar, im Innern der Zelle zu einer Druckentspannung der Zelle führt, und/oder eine formstabile Öffnung in Form einer Düse mit einer Verschlusseinrichtung, insbesondere einer Metallfolie, anbringbar oder angebracht ist, so dass die Verschlusseinrichtung, insbesondere Metallfolie, im Bereich von 1.500 mbar bis zum üblichen Öffnungsdruck von Berstöffnungen von 6.000 - 7.000 mbar, insbesondere im Bereich von 3.000 - 5.000 mbar, öffnet und parallel dazu im Batteriegehäuse ein wiederverschließbares Ventil, das bei 500 bis 2.000 mbar, insbesondere 1.000 mbar öffnet, vorzusehen oder anzuordnen.
